(19) Europäisches Patentamt
European Patent Office
Office européen des brevets

(11) **EP 2 367 760 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **09764734.1**

(22) Anmeldetag: **03.12.2009**

(51) Int Cl.:
*C01B 33/38* (2006.01)        *C11D 3/12* (2006.01)
*D21H 13/38* (2006.01)        *D21H 19/00* (2006.01)

(86) Internationale Anmeldenummer:
**PCT/EP2009/008642**

(87) Internationale Veröffentlichungsnummer:
**WO 2010/063479 (10.06.2010 Gazette 2010/23)**

(54) **VERFAHREN ZUR HERSTELLUNG EINER SCHICHTSILIKAT-ZUSAMMENSETZUNG, SOWIE DEREN VERWENDUNG**

METHOD FOR PRODUCING A PHYLLOSILICATE COMPOSITION, AND USE THEREOF

PROCÉDÉ DE PRODUCTION D'UNE COMPOSITION DE SILICATE EN FEUILLETS, ET LEUR UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.12.2008 DE 102008060296**

(43) Veröffentlichungstag der Anmeldung:
**28.09.2011 Patentblatt 2011/39**

(73) Patentinhaber: **Süd-Chemie IP GmbH & Co. KG 80333 München (DE)**

(72) Erfinder:
• **ZORJANOVIC, Jovica 85368 Moosburg (DE)**
• **RUF, Friedrich 84184 Tiefenbach-Ast (DE)**

(74) Vertreter: **Silber, Anton et al Clariant Produkte (Deutschland) GmbH Patent & License Management Lenbachplatz 6 80333 München (DE)**

(56) Entgegenhaltungen:
WO-A1-00/75079        DE-A1- 10 357 541
US-A- 4 737 306        US-A- 5 223 098
US-A- 5 391 228        US-A- 6 045 657

EP 2 367 760 B1

**Beschreibung**

Die Erfindung betrifft ein Verfahren zur Herstellung einer Schichtsilikatzusammensetzung, sowie deren Verwendung zur Herstellung von Papier, Pappe, Karton und/oder papierhaltigem Verbundwerkstoff.

Alkalisch aktivierte Schichtsilikate werden unter anderem in dualen Retentionssystemen bei der Papierherstellung eingesetzt. Dabei müssen die Schichtsilikatdispersionen strenge Anforderungen in Bezug auf das Vorliegen einer Mindestviskosität erfüllen. Oftmals tritt jedoch bei alkalisch aktivierten Schichtsilikaten, wie beispielsweise alkalisch aktivierten Bentonite, auch während einer normal verlaufenden Lagerung eines fertig produzierten Pulvers oder einer Dispersion ein Abfall in der Viskosität während der Dauer der Lagerung und des Transports ein. Die Ursachen dieses Viskositätsabfalls sind bislang noch nicht vollständig aufgeklärt und das Ausmaß des Viskositätsabfalls hängt von zahlreichen Faktoren, insbesondere der Zeitdauer der Lagerung ab (siehe z.B. Lebendenko und Plee, Applied Clay Science, 3 (1988), S. 1 bis 10). Wenn der Viskositätsabfall in deutlichem Maße erfolgt, kann dies dazu führen, dass das Material den anwenderspezifischen Anforderungen nicht mehr genügt und das Produkt nicht mehr abgenommen wird, wobei dies sowohl für den Hersteller, als auch für den Endabnehmer mit großen Nachteilen verbunden ist.

Ein Vorgehensansatz zur Veränderung der Viskosität von Schichtsilikat-Zusammensetzungen wird beispielsweise in der US 4,359,339 beschrieben, wobei dieser darauf beruht, dass wasserlösliche Aluminiumsalze zu Dispersionen mit einem Gehalt von 11 bis 26 Gew.-% an Natrium-Bentonit zugesetzt werden. Von Nachteil bei diesem Verfahren ist jedoch, dass $Al^{3+}$ - Ionen bei zahlreichen Anwendungen nicht erwünscht sind und zumindest einige Aluminiumsalze als reizend wirkende Stoffe eingestuft sind, sowie dass eine Lagerung und ein Transport von Dispersionen mit hohem Wassergehalt in hohem Maße kostenaufwändig ist.

In der US 35,391 ,228 werden Smektit-Tone (auch als Bentonit- Ton bezeichnet) und insbesondere Aufschlämmungen von Smektit-Ton mit erhöhtem Feststoffgehalt beschrieben, sowie ein Verfahren zur Herstellung von Bentonit-Ton enthaltenden, stabilen, pumparen, wässrigen Aufschlämmungen mit hohem Feststoffgehalt, die eine gute Verdünnung aufweisen. Die Auschlämmung weist dabei eine wirksame Konzentration an einem Salz auf, dessen Kation einwertig ist.

In der US 5, 223,098 wird ein Papierherstellungsverfahren und insbesondere die Bereitstellung von Bentonit-Quelltonen in Form eines flüssigen Konzentrats mit einem Bentonit-Gehalt von mehr als 15 %, das für die Verwendung bei der Papiermühle besonders geeignet ist, beschrieben. Die Quellung des Bentonits wird dabei durch anorganische Elektrolyte im Konzentrat vermieden.

Aufgabe der vorliegenden Erfindung ist daher die Bereitstellung eines alternativen Verfahrens, das die Herstellung einer Schichtsilikat-Zusammensetzung ermöglicht, die auch nach längerer Lagerung, beispielsweise von mehr als drei Monaten, insbesondere von mehr als sechs Monaten, ihre Fähigkeit bewahrt, beim Dispergieren in Wasser eine Dispersion geeigneter Viskosität bereitzustellen, sowie ein gutes Quellvermögen aufweist. Ein derartiges Verfahren sollte vorzugsweise kostengünstig ausführbar sein und kostengünstige Ausgangsmaterialien verwenden, welche die Kosten des Endprodukts nicht oder nur in geringem Maße im Vergleich zu Verfahren des Stands der Technik erhöhen und zudem vorzugsweise nicht oder nur in geringem Maße zu einer weiteren Absenkung des pH-Werts des Endprodukts beitragen. Zudem sollte ein derartiges Verfahren nur eine geringe Anzahl an Verarbeitungsschritten aufweisen und vorzugsweise weniger Verarbeitungsschritte als Verfahren des Stands der Technik erfordern. Insbesondere sollte ein durch ein derartiges Verfahren erhältliches aktiviertes Schichtsilikat in handelsüblichen Retentions- und Drainagesystemen, wie beispielsweise dem Hydrocol® oder Telioform® System, eingesetzt werden können.

Gelöst wird die Aufgabe der vorliegenden Erfindung durch die Bereitstellung eines Verfahrens mit den Merkmalen des Patentanspruchs 1. Bevorzugte Ausführungsformen sind in den Unteransprüchen angegeben. Während der zahlreichen Versuche, die zu der vorliegenden Erfindung führten, stellten die Erfinder überraschenderweise fest, dass eine Behandlung eines Schichtsilikats mit einer Kombination von Natriumcarbonat und einem weiteren Aktivierungsreagenz, das ausgewählt ist aus Alkalimetallsalzen der Gruppe bestehend aus Chloriden, Sulfaten, Phosphaten, Monohydrogenphosphaten, Dihydrogenphosphaten, Nitraten und Gemischen hiervon Schichtsilikatzusammensetzungen mit sehr guten Materialeigenschaften bereitgestellt werden können, wobei diese auch nach Lagerung und Transport der Schichtsilikatzusammensetzung weitgehend erhalten bleiben. Insbesondere können durch das erfindungsgemäße Verfahren erhältliche Schichtsilikat-Zusammensetzungen auch nach einer Lagerung von beispielsweise mindestens 12 Wochen oder mehr, vorzugsweise mindestens 26 Wochen oder mehr bei einem Dispergieren in Wasser Dispersionen bereitstellen, deren Viskosität nicht unter einen Viskositätsgrenzwert abfällt. Auch nach längerer Lagerung weisen die mit dem erfindungsgemäßen Verfahren zugänglichen Schichtsilikatzusammensetzungen ein gutes Quellvermögen auf. Das Quellvermögen der Schichtsilikatzusammensetzungen nimmt auch bei einer Lagerung über mehrere Monate nicht bzw. nur in geringem Ausmaß ab, sodass auch nach einer beispielsweise mehrwöchigen Lagerung Dispersionen hergestellt werden können, welche die gewünschte hohe Viskosität aufweisen. Die Erfinder haben festgestellt, dass die Anionen der für die Aktivierung des Schichtsilikats eingesetzten Alkalimetallsalze einen Einfluss auf die Viskositätseigenschaften einer Suspension der Schichtsilikatzusammensetzung in Wasser haben.

Wird ein Schichtsilikat mit Natriumcarbonat aktiviert, nimmt die Viskosität einer aus dem aktivierten Schichtsilikat hergestellten Suspension zunächst mit steigender Menge an eingesetztem Natriumcarbonat zu bis ein Viskositätsmaximum bei einer Menge an Natriumcarbonat erreicht wird, die etwa 100 bis 110 % der Kationenaustauschkapazität des Schichtsilikats entspricht. Wird die Menge an Natriumcarbonat weiter erhöht, sinkt die Viskosität der aus dem aktivierten Schichtsilikat hergestellten Suspension wieder ab. Ohne an diese Theorie gebunden sein zu wollen führen die Erfinder diesen Effekt auf mehrwertige Kationen, insbesondere Calcium- und Magnesiumionen zurück, die aus dem Schichtsilikat durch Natriumionen ausgetauscht werden. Durch den Überschuss an Carbonationen finden Ausfällungs- und Alterungsprozesse statt, die sich nachteilig auf die Delaminierung der einzelnen Schichten des Schichtsilikats auswirken.

Wird nun das Natriumcarbonat teilweise durch andere Alkalimetallsalze ersetzt, die vorzugsweise Anionen enthalten, die mit mehrwertigen Kationen, insbesondere Calcium- und Magnesiumionen gut wasserlösliche Salze bilden, kann bei einer Überaktivierung des Schichtsilikats eine weitere Steigerung der Viskosität einer Suspension des aktivierten Schichtsilikats erreicht werden.

Allerdings kann das Anion des neben Natriumcarbonat eingesetzten Alkalisalzes nicht beliebig gewählt werden. Werden komplexbildende Anionen gewählt, wie beispielsweise Natriumphosphonat oder Anionen, die beispielsweise mehrere Carboxylgruppen umfassen, also chelatbildende Kationen, wie EDTA, sinkt die Viskosität der Aufschlämmung, wenn derartige Alkalimetallsalze zusammen mit Natriumcarbonat eingesetzt werden.

Ohne an diese Theorie gebunden sein zu wollen erklären sich die Erfinder diesen Effekt damit, dass diese komplexbildenden Anionen an die Kanten der delaminierten Schichtsilikatplättchen koordiniert werden, an denen Aluminiumionen mit freien Koordinationsstellen positioniert sind. Durch die Koordination der Anionen verändert sich die Ladung bzw. die Ladungsdichte an den Kanten der Schichtsilikatplättchen.

Um eine hohe Viskosität zu erreichen ist erwünscht, dass die Plättchen der Schichtsilikatzusammensetzung eine "Kartenhausstruktur" ausbilden, bei der jeweils die Kanten des einen Plättchens auf der Fläche eines benachbarten Schichtsilikatplättchens anliegen. Die Fläche eines Schichtsilikatplättchens ist negativ geladen. Durch die an den Kanten des Schichtsilikatplättchens koordinierten komplexbildenden Anionen erhalten auch die Kanten des Schichtsilikatplättchens eine negative Ladung. Dadurch bildet sich keine Kartenhausstruktur mehr aus und die Viskosität der Suspension des Schichtsilikats sinkt.

Die im erfindungsgemäßen Verfahren verwendeten Alkalimetallsalze enthalten Anionen, die keine nachteilige Wirkung auf die Viskosität der Suspension der Schichtsilikatzusammensetzung ausüben. Dadurch kann die Konzentration an Alkalimetallionen bei der Aktivierung des Schichtsilikats weiter gesteigert werden, was zu einer Verbesserung der Delaminierung des Schichtsilikats führt, wenn dieses in Wasser suspendiert wird, wobei sich eine für eine hohe Viskosität der Suspension vorteilhafte Struktur der Schichtsilikatplättchen ausbilden kann.

Die Erfindung stellt daher ein Verfahren zur Herstellung einer Schichtsilikatzusammensetzung zur Verfügung, welches umfasst:

a. Bereitstellen eines Ausgangsmaterials, welches mindestens ein Schichtsilikat umfasst;

b. Inkontaktbringen des Ausgangsmaterials während einer Behandlungszeitspanne

- mit mindestens einem Alkalimetallsalz, ausgewählt aus der Gruppe bestehend aus Chloriden, Sulfaten, Phosphaten, Monohydrogenphosphaten, Dihydrogenphosphaten, Nitraten und Gemischen hiervon,

- sowie mit Natriumcarbonat

wobei die Menge an Natriumcarbonat so gewählt wird, dass die Menge der Natriumionen zwischen 80 und 120 % der gesamten Kationenaustauscherkapazität des Schichtsilikats entspricht und die Menge des zumindest einen Alkalimetallsalzes so gewählt wird, dass die Menge der Alkalimetal-lionen zwischen 20 und 50 % der gesamten Kationenaustauscherkapazität des Schichtsilikats entspricht, wobei sich die Prozentangaben auf Äquivalente beziehen,
wobei das eine Alkalimetallsalz Natrium oder Kalium enthält, und
wobei das Schichtsilikat ausgewählt ist aus Bentonit, Montmorillonit, Hectorit, Saponit, Stevensit, Beidelit, Nontronit und deren Gemischen.

Beim erfindungsgemäßen Verfahren wird zunächst ein Ausgangsmaterial bereit gestellt, welches mindestens ein Schichtsilikat umfasst. Der Anteil des mindestens einen Schichtsilikat am Ausgangsmaterial beträgt vorzugsweise mindestens 80 Gew.-%, bevorzugt mindestens 90 Gew.-%, weiter bevorzugt mindestens 98 Gew.-% des Gesamtfeststoffgehalts des Ausgangsmaterials.

Das Ausgangsmaterials wird dann während einer Behandlungszeitspanne mit mindestens einem Alkalimetallsalz, ausgewählt aus der Gruppe bestehend aus Chloriden, Sulfaten, Phosphaten, Monohydrogenphosphaten, Dihydrogenphosphaten, Nitraten und Gemischen hiervon, sowie mit Natriumcarbonat in Kontakt gebracht. Beim erfindungsgemäßen Verfahren wird das Schichtsilikat also mit mindestens zwei verschiedenen Alkalimetallsalzen behandelt, nämlich mit einem Alkalimetallsalz aus der oben beschriebenen Gruppe sowie mit Natriumcarbonat.

Im Rahmen der vorliegenden Erfindung werden Veränderungen in den chemischen und/oder physikalischen Eigenschaften einer Schichtsilikat-Zusammensetzung nach Abschluss der Behandlung des Ausgangsmaterials, insbesondere nach Gewinnung der Schichtsilikat-Zusammensetzung auch als "Alterung" bezeichnet.

Ohne dass die vorliegende Erfindung auf die Richtigkeit der nachstehenden Annahme beschränkt wäre, wird angenommen, dass eine Alterung von mit Natriumcarbonat behandelten Schichtsilikatzusammensetzungen darauf beruht, dass mit der Zeit eine Wanderung und anschließende Immobilisierung von einwertigen Kationen, insbesondere von Natrium-Kationen, aus den Zwischenschichten der Bentonitplättchen stattfindet, was dazu beiträgt, dass sich die einwertigen Kationen auf der Oberfläche der Schichtsilikate, beispielsweise von Bentonit ansammeln. Darüber hinaus kann eine Alterung von mit Natriumcarbonat behandelten Schichtsilikatzusammensetzungen auch darauf beruhen, dass eine sog. Rückaktivierung stattfindet, d. h. ein Austausch der einwertigen Kationen, wie Natriumkationen durch zweiwertige Kationen, wie Calcium- und/oder Magnesium-Kationen. Dies kann wiederum dazu führen, dass bei einem Dispergieren von Schichtsilikaten in Wasser, insbesondere bei Dispersionen mit einem Gehalt von 1 bis 7 Gew.-%, insbesondere von etwa 5 Gew.-% Schichtsilikat, bezogen auf das Gesamtgewicht der Dispersion, die diffuse Ionenschicht um die Schichtsilikatplättchen soweit verringert wird, dass die Partikel anfangen zu koagulieren und sich mit der Zeit immer mehr Agglomerate bilden. In Folge dessen weisen Dispersionen, die ausgehend von Schichtsilikat-Zusammensetzungen unterschiedlichen Alters hergestellt werden, unterschiedliche Viskosität und Quelleigenschaften auf.

Bei dem Schichtsilikat kann es sich sowohl um ein natürliches Schichtsilikat handeln, das heißt um ein Schichtsilikat, das durch einen Abbau von natürlichen Vorkommen gewonnen werden kann, oder um ein synthetisch hergestelltes Schichtsilikat, insbesondere um ein Schichtsilikat, das ausgehend von anderen silikatischen Materialien, insbesondere Schichtsilikaten hergestellt wird, handeln.

Bei dem Schichtsilikat handelt es sich um ein smektitisches Schichtsilicat oder ein Gemisch von smektitischen Schichtsilikaten ausgewählt aus der Gruppe, bestehend aus Bentonit, Montmorillonit, Hectorit, Saponit, Stevensit, Beidelit, Nontronit und deren Gemischen. Vorzugsweise handelt es sich bei dem Schichtsilikat um ein nicht kalziniertes Schichtsilikat, das heißt um ein Schichtsilikat, das nach seiner Darstellung oder Gewinnung beispielsweise nicht über 500°C, vorzugsweise nicht über 200°C, insbesondere nicht über 115°C erhitzt wurde. Silikate, sowie ihr Aufbau und ihre Zusammensetzung werden zudem beispielsweise in dem Lehrbuch "Holleman-Wiberg, Lehrbuch der Anorganischen Chemie" von N. Wiberg, 91.-100. Aufl., Walter de Gruyter & Co., 1985, ISBN 3-11-007511-3, S. 768 bis 779 erläutert.

Besonders bevorzugt ist, wenn das mindestens eine Schichtsilikat Bentonit umfasst oder aus diesem besteht. Bentonite weisen als Hauptbestandteil Montmorillonit auf, wobei sich dieser durch ein besonders vorteilhaftes chemisch-physikalisches Verhalten, insbesondere durch ein besonders vorteilhaftes Quellvermögen, auszeichnet. Montmorillonit ist ein Dreischichtmineral, aufgebaut aus zwei $SiO_4$-Tetraederschichten zwischen denen sich eine Oktaederschicht befindet, die überwiegend Aluminiumionen enthält. Das Verhalten von Bentonit in wässrigen Systemen wird durch die permanente negative Schichtladung geprägt, die durch isomorphe Substitution und Fehlstellen in der Silikatschicht entsteht und variable Ladung an den Rändern der Bentonitkristalle beeinflusst. Zwischen den Schichten befinden sich Kationen, die austauschfähig sind.

Das Schichtsilikat kann gemäß einer Ausführungsform überwiegend mehrwertige Kationen als austauschbare Kationen enthalten. Die mehrwertigen Kationen werden bevorzugt von zweiwertigen Kationen gebildet, insbesondere bevorzugt von aus der Gruppe von Calciumionen und Magnesiumionen. Bevorzugt werden zumindest 50 %, gemäß einer weiteren Ausführungsform zumindest 60 %, gemäß einer weiteren Ausführungsform zumindest 80 % der gesamten Kationenaustauscherkapazität des Schichtsilikats von mehrwertigen Kationen, insbesondere $Ca^{2+}$ und/oder $Mg^{2+}$, gebildet. Die Angaben beziehen sich auf Äquivalente. Ein Verfahren zur Bestimmung der Kationenaustauscherkapazität und dem Anteil einzelner Metallionen an der Kationenaustauscherkapazität des Schichtsilikats sind bei den Beispielen beschrieben.

Gemäß einer Ausführungsform wird Calciumbentonit oder Calcium/Magnesiumbentonit als Schichtsilikat eingesetzt. Unter einem Calciumbentonit bzw. einem Calcium/Magnesiumbentonit wird ein Bentonit verstanden, bei welchem die austauschbaren Kationen überwiegend durch Calciumionen bzw. Calcium- und Magnesiumionen gebildet werden. Vorzugsweise beträgt der Anteil der Calciumionen bzw. Calcium- und Magnesiumionen an der gesamten Kationenaustauschkapazität des Schichtsilikats zumindest 50 %, gemäß einer gemäß einer weiteren Ausführungsform zumindest 60 %, gemäß einer weiteren Ausführungsform zumindest 80 % der gesamten Kationenaustauscherkapazität.

Das Schichtsilikat umfassende Ausgangsmaterial wird dann mit mindestens einem Alkalimetallsalz, ausgewählt aus der Gruppe bestehend aus Chloriden, Sulfaten, Phosphaten, Monohydrogenphosphaten, Dihydrogenphosphaten, Nitraten und Gemischen hiervon, sowie weiter mit Natriumcarbonat in Kontakt gebracht und behandelt.

Das Ausgangsmaterial kann mit dem mindestens einen Alkalimetallsalz und dem Natriumcarbonat auf eine dem Fachmann bekannte Weise in Kontakt gebracht werden.

Schichtsilikatzusammensetzungen mit sehr guten Materialeigenschaften werden insbesondere erhalten, wenn das mindestens eine Alkalimetallsalz und/oder Natriumcarbonat als Fluid, beispielsweise als Lösung oder Dispersion, oder als Feststoff zu dem Ausgangsmaterial zugegeben wird. Die Zugabe von Alkalimetallsalz und/oder Natriumcarbonat kann in einer oder mehreren Teilportionen erfolgen und wenn erwünscht kontinuierlich über die gesamte Behandlungszeitspanne oder einen Teil hiervon erfolgen. Das zumindest eine Alkalimetallsalz, sowie das Natriumcarbonat kann in Form eines Gemisches, welches ein oder mehrere Alkalimetallsalze und Natriumcarbonat umfasst, oder jeweils getrennt voneinander mit dem Ausgangsmaterial in Kontakt gebracht werden.

Die Behandlung des Ausgangsmaterials mit dem mindestens einen Alkalimetallsalz und/oder Natriumcarbonat kann auf eine dem Fachmann bekannte Weise erfolgen, indem das Ausgangsmaterial mit einem oder mehreren Alkalimetallsalzen und Natriumcarbonat oder einem Natriumcarbonat und ein oder mehrere Alkalimetallsalze umfassenden Gemisch auf eine dem Fachmann bekannte Weise gemischt, insbesondere mechanisch gemischt, wird.

Vorzugsweise kann ein mechanisches Mischen durch Rühren, Kneten und/oder Extrudieren erfolgen. Das Ausgangsmaterial kann vor Beginn der Behandlung in fester Form, beispielsweise als Pulver, oder in fluider Form, beispielsweise als Dispersion, vorliegen.

Insbesondere zum Kneten oder Extrudieren sollte das Schichtsilikat bzw. das Gemisch aus dem Schichtsilikat und dem mindestens einen Alkalimetallsalz und dem Natriumcarbonat eine ausreichende Plastizität aufweisen. Bevorzugt weist das Schichtsilikat bzw. das Gemisch aus dem Schichtsilikat und dem mindestens einen Alkalimetallsalz und dem Natriumcarbonat einen Wassergehalt von mindestens 20 Gew.-%, gemäß einer Ausführungsform einen Wassergehalt im Bereich von 25 bis 40 Gew.-% auf.

Wenn erwünscht, kann während des Schritts der Behandlung des Ausgangsmaterials mit einem oder mehreren Alkalimetallsalzen und/oder Natriumcarbonat Wasser zugesetzt werden, so dass in Abhängigkeit von der zugesetzten Menge an Wasser nach Abschluss der Behandlung ein Fluid, beispielsweise eine Dispersion erhalten werden kann. Das Wasser kann gemäß einer Ausführungsform zugegeben werden, indem das Alkalimetallsalz bzw. das Natriumcarbonat in Form einer wässrigen Lösung zum Schichtsilikat gegeben werden.

Zudem können während des Schritts der Behandlung des Ausgangsmaterials eine oder mehrere weitere Komponenten, die von einem Fachmann ausgewählt werden können, zugesetzt werden. Insbesondere können ein oder mehrere Komponenten ausgewählt aus der Gruppe, bestehend aus organischen und/oder anorganischen Lösungsmitteln, anorganischen und/oder organischen Säuren und deren Salzen, anorganischen und/oder organische Basen und deren Salzen, Tensiden, Flockungsmitteln, Farbstoffen, etc. zugegeben werden.

Eine Behandlung kann jedoch auch ohne ein mechanisches Vermischen erfolgen. Insbesondere kann das Ausgangsmaterial mit einem Fluid, insbesondere einem wässrigen Fluid, beispielsweise einer Lösung oder Dispersion des mindestens einen Alkalimetallsalzes bzw. des Natriumcarbonats an der Oberfläche in Kontakt gebracht werden und dieses einwirken gelassen werden. Hierbei erfolgt eine Behandlung des Ausgangsmaterials indem die Lösung des mindestens einen Alkalimetallsalzes bzw. des Natriumcarbonats durch Poren oder Risse an der Oberfläche, sowie durch physikalische und/oder chemische Kräfte, wie beispielsweise Kapillarkräfte in das Ausgangsmaterial eindringt. Optional kann vor einem in Kontakt bringen des Ausgangsmaterials mit dem mindestens einen Alkalimetallsalz, insbesondere mit mindestens einem Alkalimetallsalz-Fluid die Oberfläche des Ausgangsmaterial vorbehandelt, beispielsweise aufgerauht oder mit Löchern und/oder Durchgangskanälen versehen werden, um so das Eindringen des Alkalimetallsalzes bzw. des Natriumcarbonats in das Innere des Ausgangsmaterials zu fördern.

Die Behandlungszeitspanne der Behandlung mit mindestens einem Alkalimetallsalz sowie mit Natriumcarbonat kann ein Fachmann in Abhängigkeit von den verwendeten Ausgangsmaterialien wählen, wobei diese in hohem Maße von den gewählten Behandlungsschritten abhängt. Falls die Behandlung ein Vermischen umfasst, so wird ein Fachmann die Zeitdauer in Abhängigkeit von den verwendeten Ausgangsmaterialien wählen. Vorzugsweise beträgt die Zeitdauer 0,5 bis 20 Minuten, bevorzugt 1 bis 11 Minuten, insbesondere 2 bis 6 Minuten. Falls die Behandlung ein Aufbringen, beispielsweise Aufsprühen, einer Alkalimetallsalz- bzw. Natriumcarbonatlösung umfasst, so kann das Aufbringen, das ein oder mehrmals erfolgen kann, und das anschließende Einwirken eine Dauer von beispielsweise mindestens 3 Stunden, vorzugsweise von 3 Stunden bis 3 Tagen, vorzugsweise 18 Stunden bis 2 Tagen beanspruchen. Im Rahmen der vorliegenden Anmeldung wird als Ende der Behandlungszeitspanne im Falle eines mechanischen Mischens (beispielsweise eines Extrudierens oder Knetens) als einzigem oder abschließenden Behandlungsvorgang die Beendigung des Mischens oder im Falle eines Aufbringens und Einwirken Lassens in Abwesenheit eines mechanischen Mischens (beispielsweise eines Aufsprühens und Ruhenlassens des besprühten Materials) als einzigem oder abschließenden Behandlungsvorgang ein Zeitpunkt 1 Tag nach Beendigung des Aufbringens angesehen.

Zudem kann das Behandeln des Ausgangsmaterials bei einer Temperatur von beispielsweise unter 90°C, bevorzugt bei einer Temperatur von unter 70°C, insbesondere bei einer Temperatur von unter 45°C erfolgen.

Die Schichtsilikatzusammensetzung kann unmittelbar in der Form, wie sie beim erfindungsgemäßen Verfahren erhalten wird, in weiteren Verfahren eingesetzt werden, beispielsweise bei der Papierherstellung.

Die Schichtsilikatzusammensetzung kann aber auch getrocknet und ggf. gemahlen werden. Dies ist beispielsweise vorteilhaft, wenn die Schichtsilikatzusammensetzung verpackt und für die weitere Verarbeitung zu einem entfernten Platz transportiert werden soll. Nach dem Trocknen weist die Schichtsilikatzusammensetzung bevorzugt einen Wassergehalt im Bereich von 10 bis 30 Gew.-%, gemäß einer weiteren Ausführungsform einen Wassergehalt von 15 bis 25 Gew.-% auf.

Die Behandlung des Schichtsilikats mit dem zumindest einen Alkalimetallsalz und dem Natriumcarbonat kann an sich in beliebiger Reihenfolge erfolgen. Das Schichtsilikat kann zunächst mit dem Natriumcarbonat und anschließend mit dem zumindest einen Alkalimetallsalz in Kontakt gebracht werden. Es kann aber auch eine andere Reihenfolge gewählt werden.

Gemäß einer Ausführungsform kann das Inkontaktbringen des Schichtsilikats mit Natriumcarbonat gleichzeitig oder nach dem Inkontaktbringen mit dem mindestens einen Alkalimetallsalz erfolgen.

Die vorstehend angegebene Reihenfolge des Inkontaktbringens und Behandelns des Ausgangsmaterials mit dem mindestens einen Alkalisalz und Natriumcarbonat führt zu Schichtsilikat- Zusammensetzungen mit sehr guten Materialeigenschaften, die beim Dispergieren in Wasser eine vergleichsweise hohe Viskosität aufweisen und die auch nach bis zu 12 Wochen, insbesondere bis zu 26 Wochen, bei einem Dispergieren in Wasser Viskositätswerte ausreichender Höhe aufweisen.

Wenn das Inkontaktbringen mit Natriumcarbonat gleichzeitig oder nach dem Inkontaktbringen mit dem mindestens einen Alkalimetallsalz erfolgt, wie es gemäß der Ausführungsform des erfindungsgemäßen Verfahrens gelehrt wird, so kann das mindestens eine Alkalimetallsalz gleichzeitig oder vor Beginn der Einwirkung von Natriumcarbonat mit dem Schichtsilikat-haltigen Ausgangsmaterial wechselwirken und auf dieses einwirken. Die erfindungsgemäß verwendeten Alkalimetallsalze sind sehr gut wasserlöslich. Sie stehen daher sehr gut für einen Austausch der im Schichtsilikat vorhandenen austauschbaren Kationen, insbesondere mehrwertigen Kationen, insbesondere Calciumionen und Magnesiumionen zur Verfügung. Die Anionen bilden mit den ausgetauschten Kationen, insbesondere Calciumionen und Magnesiumionen, Salze die eine relativ hohe Löslichkeit in Wasser aufweisen, sodass die ausgetauschten Ionen nicht unmittelbar durch Carbonationen ausgefällt werden.

Vorzugsweise kann Schritt b) des Inkontaktbringens und Behandelns des Ausgangsmaterials ein Behandeln des Ausgangsmaterials mit dem mindestens einen Alkalimetallsalz, gefolgt von einem in Kontakt kommen und Behandeln des mit mindestens einem Alkalimetallsalz behandelten Ausgangsmaterials mit Natriumcarbonat, umfassen und/oder ein Behandeln des Ausgangsmaterials während der gesamten Behandlungszeitspanne oder eines Abschnitts hiervon mit gleichzeitig dem mindestens einen Alkalimetallsalz und Natriumcarbonat, vorzugsweise mit einem mindestens ein Alkalimetallsalz und Natriumcarbonat umfassenden Gemisch, umfassen.

Bei dem erfindungsgemäßen Verfahren wird gemäß einer bevorzugten Ausführungsform das zumindest eine Alkalimetallsalz und das Natriumcarbonat gleichzeitig zum Schichtsilikat gegeben, gemäß einer Ausführungsform in Form eines Gemisches.

Schichtsilikat-Zusammensetzungen mit sehr guten Materialeigenschaften und Lagerfähigkeit können insbesondere erhalten werden, wenn das mindestens eine Alkalimetallsalz ein Alkalimetallsalz ausgewählt aus der Gruppe, bestehend aus Natriumchlorid, Natriumsulfat, Natriumphosphat, Natriummonohydrogenphosphat, Natriumdihydrogenphosphat, Natriumnitrat, Kaliumchlorid, Kaliumsulfat, Kaliumphosphat, Kaliummonohydrogenphosphat, Kaliumdihydrogenphosphat, Kaliumnitrat und Gemischen hiervon, umfasst. Besonders hochwertige Schichtsilikat-Zusammensetzungen können erhalten werden, wenn das mindestens eine Alkalimetallsalz ein Alkalimetallsalz ausgewählt aus der Gruppe, bestehend aus Natriumchlorid, Natriumsulfat, Natriumphosphat, Natriummonohydrogenphosphat, Natriumdihydrogenphosphat, Natriumnitrat und Gemischen hiervon, umfasst.

Im Rahmen der vorliegenden Anmeldung umfassen die Begriffe "Alkalimetallsalz" und "Natriumcarbonat" sowohl das jeweilige wasserfreie Salz, als auch Salze in Form von Hydraten. Vorzugsweise umfasst Natriumcarbonat Soda oder besteht aus diesem. Zudem umfasst im Rahmen der vorliegenden Anmeldung der Begriff "Alkalimetallsalz" weder Natriumcarbonat, noch Natriumhydrogencarbonat.

Falls das Ausgangsmaterial zunächst mit dem mindestens einen Alkalimetallsalz in Kontakt gebracht wird, kann dies insbesondere durch Aufbringen, beispielsweise Aufsprühen, eines wasserhaltigen Alkalimetallsalz-Fluids, insbesondere eines Natriumchlorid- oder Natriumsulfat-Fluids, oder durch Zugeben von einem oder mehreren Alkalimetallsalzen in fester Form, beispielsweise als Pulver, erfolgen. Die Behandlung kann bei dieser Ausführungsform insbesondere durch Einwirkenlassen des wasserhaltigen Alkalimetallsalz-Fluids und/oder durch mechanisches Mischen, beispielsweise Kneten und/oder Extrudieren, erfolgen. Nach einer anschließenden Zugabe von Natriumcarbonat oder einem Natriumcarbonat und/oder ein oder mehrere Alkalimetallsalze umfassenden Gemisch, kann ein mechanisches Mischen, beispielsweise Kneten und/oder Extrudieren, erfolgen.

Zudem kann das Inkontaktbringen des Ausgangsmaterials mit dem mindestens einen Alkalimetallsalz und Natriumcarbonat gleichzeitig erfolgen. Insbesondere kann das mindestens eine Alkalimetallsalz und Natriumcarbonat dem Ausgangsmaterial gleichzeitig, beispielsweise in Form eines festen oder fluiden Gemisches, zugesetzt werden und mit diesem vermengt werden.

Überraschenderweise führt bereits eine Extrusion eines Schichtsilikat-haltigen Ausgangsmaterials mit Natriumcarbonat, insbesondere Soda, und mindestens einem Alkalimetallsalz, insbesondere Natriumchlorid, zu Schichtsilikat-Zusammensetzungen, die eine Herstellung von Schichtsilikat-ZusammensetzungsDispersionen mit sehr guter Viskosität und einem guten Quellverhalten ermöglichen. Bemerkenswert ist, dass nach einer erfindungsgemäßen Herstellung einer Schichtsilikat- Zusammensetzung und einer Lagerung von 2 bis 6 Monaten Schichtsilikat-Zusammensetzungsdispersionen mit deutlich besserer Viskosität erhalten werden als bei herkömmlichen, mit Natriumcarbonat behandelten Schichtsilikat-Zusammensetzungen.

Insbesondere weisen erfindungsgemäße Schichtsilikat- Zusammensetzungen bereits bei lediglich einer einmaligen Extrusion alle erforderlichen Merkmale für eine Verwendung zur Herstellung von Papier, Pappe, Karton und papierhaltigen Verbundwerkstoffen, insbesondere die Fähigkeit zur Bereitstellung einer guten Retention, auf. Zudem stellen die erfindungsgemäßen Schichtsilikat-Zusammensetzungen, ein höheres Quellvermögen als herkömmliche, mit Natriumcarbonat in Kontakt gebrachte Schichtsilikat-Zusammensetzungen bereit.

Unter verfahrenstechnischen Gesichtspunkten ist zudem von Vorteil, dass bei dem erfindungsgemäßen Verfahren die Aktivierung in mehreren Stufen ablaufen kann, so dass die durch die Behandlung erfolgende Aktivierung zu einem gewünschten Zeitpunkt und in anwendungsspezifisch gewählten Mengen erzielt werden kann. Vorzugsweise kann bei einer stufenweise erfolgenden Behandlung in einer ersten Stufe eine Behandlung mit mindestens einem Alkalimetallsalz oder mit mindestens einem Alkalimetallsalz und Natriumcarbonat oder mit Natriumcarbonat erfolgen, und in einer zweiten Stufe eine Behandlung mit Natriumcarbonat oder mindestens einem Alkalimetallsalz und Natriumcarbonat oder mindestens einem Alkalimetallsalz erfolgen.

Diese Ausführungsform ermöglicht es beispielsweise, dass zunächst eine Teilaktivierung des Schichtsilikats vorgenommen wird und zu einem späteren Zeitpunkt, beispielsweise wenn die Schichtsilikatzusammensetzung nach einer gewissen Lagerzeit in einer Anwendung eingesetzt wird, beispielsweise zur Papierherstellung, weiter aktiviert wird. Dadurch können Alterungseinflüsse, die bei der Lagerung der Schichtsilikatzusammensetzung auftreten, zumindest teilweise kompensiert werden.

Ein Einsatz einer sehr großen Menge an dem zumindest einen Alkalimetallsalz ist unter wirtschaftlichen Gesichtspunkten nicht erwünscht. Außerdem wird bei sehr großen Mengen an dem zumindest einen Alkalimetallsalz wieder eine Abnahme der Viskosität der Suspension der Schichtsilikatzusammensetzung beobachtet.

Die Menge an Natriumcarbonat wird so gewählt, dass die Menge der Natriumionen zwischen 80 und 120 %, gemäß einer weiteren Ausführungsform zwischen 90 und 110 % der gesamten Kationenaustauscherkapazität des Schichtsilikats entspricht.

Die Menge des zumindest einen Alkalimetallsalzes wird so gewählt, dass die Menge der Alkalimetallionen zwischen 20 und 50 %, gemäß einer weiteren Ausführungsform zwischen 25 und 40 % der gesamten Kationenaustauscherkapazität des Schichtsilikats entspricht.

Gemäß einer weiteren Ausführungsform wird die gesamte Menge des Natriumcarbonats und des zumindest einen Alkalimetallsalzes so gewählt, dass die Menge der Natriumionen und der Alkalimetallionen zwischen 90 und 140 %, gemäß einer weiteren Ausführungsform zwischen 100 und 130 % der gesamten Kationenaustauscherkapazität des Schichtsilikats entspricht.

Die Prozentangaben beziehen sich auf Äquivalente.

Schichtsilikat-Zusammensetzungen mit guter Lagerfähigkeit können beispielsweise erhalten werden, wenn das Gewichtsverhältnis zwischen dem Gesamtgewicht an dem mindestens einem Alkalimetallsalz (wobei das mindestens eine Alkalimetallsalz ausgewählt ist, aus der Gruppe, bestehend aus Chloriden, Sulfaten, Phosphaten, Monohydrogenphosphaten, Dihydrogenphosphaten, Nitraten und Gemischen hiervon) zu dem Gesamtgewicht an Natriumcarbonat, die jeweils während des erfindungsgemäßen Verfahrens zur Behandlung des Ausgangsmaterials eingesetzt werden, mindestens 0,05 beträgt, vorzugsweise im Bereich von 0,1 bis 1,0 liegt, bevorzugt von 0,5 bis 1,0 liegt.

Weiterhin können qualitativ besonders hochwertige Schichtsilikat-Zusammensetzung erhalten werden, wenn das Gewichtsverhältnis zwischen dem Gesamtgewicht an dem mindestens einem Alkalimetallsalz (wobei das mindestens eine Alkalimetallsalz ausgewählt ist, aus der Gruppe, bestehend aus Chloriden, Sulfaten, Phosphaten, Monohydrogenphosphaten, Dihydrogenphosphaten, Nitraten und Gemischen hiervon), das während des erfindungsgemäßen Verfahrens zur Behandlung des Ausgangsmaterials verwendet wird, zu dem Gesamtgewicht an Schichtsilikat des Ausgangsmaterials mindestens 0,5:100 beträgt, vorzugsweise im Bereich von 1:100 bis 3:100 liegt, bevorzugt von 1,5:100 bis 3:100 liegt.

Zudem können Schichtsilikat-Zusammensetzung mit sehr guten Materialeigenschaften erhalten werden, wenn das Gewichtsverhältnis zwischen dem Gesamtgewicht an Natriumcarbonat, das während des erfindungsgemäßen Verfahrens zur Behandlung des Ausgangsmaterials verwendet wird, zu dem Gesamtgewicht an Schichtsilikat des Ausgangsmaterials mindestens 0,5:100 beträgt, vorzugsweise im Bereich von 1:100 bis 7:100 liegt, bevorzugt im Bereich von 4:100 bis 7:100 liegt, insbesondere im Bereich von 2:100 bis 3,5:100 liegt.

Bei der Behandlung mit dem mindestens einen Alkalimetallsalz und Natriumcarbonat wird eine Schichtsilikatzusammensetzung gebildet, wobei nach Abschluss der Behandlung diese beispielsweise als Extrudat, Knetmasse, Slurry oder Dispersion, vorzugsweise mit einem Feststoffgehalt von 1 bis 7 Gew.-% bezogen auf das Gesamtgewicht der Dispersion, vorliegen kann.

Das Verfahren kann, muss jedoch keinen gesonderten Schritt des Gewinnens umfassen. Beispielsweise kann auch das nach dem Behandeln anfallende Reaktionsgemisch unmittelbar weiter verwendet werden. Insbesondere kann die Schichtsilikatzusammensetzung in Form eines Pulvers, Granulats, Extrudats, Formkörpers, Slurry oder Dispersion, vorzugsweise mit einem Feststoffgehalt von 1 bis 7 Gew.-% bezogen auf das Gesamtgewicht der Dispersion, gewonnen werden. Verfahrensmaßnahmen hierfür, insbesondere zum Trocknen, Granulieren, Bilden eines Formkörpers können gemäß dem Wissen des Fachmanns nach beliebigen Verfahren erfolgen.

Das Verfahren zur Herstellung einer Schichtsilikatzusammensetzung kann zudem ein Zugeben von Papiermaterialfasern, insbesondere zellstoffhaltigen Faserstoffen, und/oder von mindestens einem Flockungsmittel umfassen. Das mindestens eine Flockungsmittel kann beispielsweise ein Polymer, insbesondere ein kationisch geladenes Polymer, vorzugsweise ein Polyacrylamid, insbesondere ein kationisch geladenes Polyacrylamid, und/oder ein anionisch geladenes Mikropartikel, insbesondere ein anionisch geladenes Polymer, umfassen oder aus diesem bestehen. Das Polymer kann aus einer oder mehreren unterschiedlichen Monomereinheiten aufgebaut sein. Vorzugsweise kann das Polymer 20 Monomereinheiten oder mehr umfassen, wobei diese gleich oder unterschiedlich sein können. Insbesondere kann es sich bei dem Polymer um ein Homopolymerisat von Methacrylamid oder Acrylamid oder um ein kationisch modifiziertes Copolymerisat von Acrylamid und/oder Methacrylamid, das heißt insbesondere ein Copolymerisat, das Methacrylamid- oder Acrylamid-Monomereinheiten, sowie eine oder mehrere, gleiche oder unterschiedliche, kationische Monomereinheiten umfasst, handeln. Besonders bevorzugt ist, dass ein Flockungsmittel ein Copolymer umfasst oder aus diesem besteht, das Acrylamid und Acryloxyethyltrimethylammoniumchlorid als Monomereinheiten umfasst. Bei dem anionisch geladenen Polymer kann es sich insbesondere um ein Polymer handeln, das durch Polymerisation von gleichen oder unterschiedlichen Monomeren erhalten werden kann, wobei die Monomere ein oder mehrere Monomere, ausgewählt aus der Gruppe, bestehend aus (Methyl)acrylsäure und deren Salzen, Sulfoethyl-(meth)acrylat, Itaconsäure, 2-Acrylamido-2-methyl-propansulfonat, Allylsulfonsäure, Styrolsulfonsäure, Vinylsulfonsäure, Maleinsäure, sowie andere mindestens zwei Säurefunktionen umfassende Verbindungen und deren Salze, umfassen können.

Während des Verfahrens zur Herstellung einer Schichtsilikatzusammensetzung können zu einem beliebigen Zeitpunkt weitere Komponenten, die von einem Fachmann ausgewählt werden können, zugesetzt werden. Beispielsweise können ein oder mehrere Komponenten ausgewählt aus der Gruppe, bestehend aus organischen und/oder anorganischen Lösungsmitteln, insbesondere Wasser, anorganischen und/oder organischen Säuren und deren Salzen, anorganischen und/oder organische Basen und deren Salzen, Tensiden, Flockungsmitteln, Farbstoffen, etc. zugegeben werden.

Besonders gute Ergebnisse können bei dem Herstellungsverfahren erhalten werden, wenn als das mindestens eine Alkalimetallsalz Natriumchlorid oder Natriumsulfat oder Gemische umfassend Natriumchlorid und Natriumsulfat eingesetzt werden. In Abhängigkeit von dem eingesetzten Alkalimetallsalz werden dabei unterschiedliche Quellvolumina erzielt.

Wenn erwünscht kann nach dem Inkontaktbringen und ggf. dem Gewinnen der Schichtsilikat-Zusammensetzung nochmals eine weitere Behandlung mit mindestens einem Alkalimetallsalz und/oder Natriumcarbonat erfolgen. Insbesondere kann ein Nachbehandlungsverfahren, wie nachstehend detailliert erläutert, durchgeführt werden.

Gemäß einer weiteren Ausführungsform des erfindungsgemäßen Verfahrens wird die Schichtsilikatzusammensetzung mit dem Natriumcarbonat in Kontakt gebracht, sodass eine alkalisch aktivierte Schichtsilikatzusammensetzung erhalten wird. Die alkalisch aktivierte Schichtsilikatzusammensetzung wird für eine Zeitspanne gelagert. Nach der Zeitspanne wird der alkalisch aktivierten Schichtsilikatzusammensetzung das Alkalimetallsalz zugesetzt.

Die Zeitspanne wird bevorzugt größer als 1 Minute, gemäß einer Ausführungsform größer als 1 Tag, gemäß einer weiteren Ausführungsform größer als 4 Wochen und gemäß einer weiteren ausführungsform größer als 26 Wochen gewählt. Gemäß einer weiteren Ausführungsform wird die Zeitspanne geringer als 36 Monate, gemäß einer weiteren Ausführungsform geringer als 30 Monate gewählt.

Der Begriff "alkalisch aktivierte Schichtsilikatzusammensetzung", wie er im Rahmen der vorliegenden Erfindung verwendet wird, umfasst jegliches Schichtsilikat oder jegliches Schichtsilikat umfassende Ausgangsmaterial, das nach seiner Herstellung oder Gewinnung mit Natriumcarbonat oder Natriumhydrogencarbonat in Kontakt gekommen und vorzugsweise damit vermischt worden ist.

Eine derartige alkalisch aktivierte Schichtsilikatzusammensetzung kann jedoch auch bereits nach dem erfindungsgemäßen Verfahren hergestellt worden sein, d.h. die Schichtsilikatzusammensetzung ist bereits mit Natriumcarbonat und dem zumindest einen Alkalimetallsalz in Kontakt gebracht worden.

Diese Ausführungsform der Erfindung ermöglicht die Nachbehandlung einer bereits alkalisch aktivierten Schichtsilikatzusammensetzung, insbesondere zur Erhöhung der Viskosität wässriger Dispersionen dieser alkalisch aktivierten Schichtsilikatzusammensetzung, wenn diese beispielsweise über einen längeren Zeitraum hinweg, zum Beispiel mehrere Wochen, gelagert wurde, ehe sie beispielsweise zur Papierherstellung verwendet wird.

Gemäß einer Ausführungsform kann diese Nachbehandlung einer alkalisch aktivierten Schichtsilikatzusammensetzung die Schritte umfassen:

a) Bereitstellen einer zumindest teilweise in fester Form vorliegenden, alkalisch aktivierten Schichtsilikatzusammensetzung, die einen Gesamtfeststoffgehalt von mehr als 80 Gew.-%, bezogen auf das Gesamtgewicht der alkalisch aktivierten Schichtsilikatzusammensetzung aufweist, wobei diese Schichtsilikatzusammensetzung zu einem ersten Zeitpunkt bei einem Dispergieren in Wasser eine Dispersion bereitstellt, die einen ersten Viskositätswert aufweist, und zu einem zeitlich späteren zweiten Zeitpunkt bei einem Dispergieren in Wasser unter gleichen Bedingungen und bei gleicher Konzentration wie bei der Bereitstellung der ersten Dispersion eine zweite Dispersion bereitstellt, die einen zweiten Viskositätswert aufweist, der niedriger als der erste Viskositätswert ist; und

b) Inkontaktbringen der alkalisch aktivierten Schichtsilikatzusammensetzung nach dem zweiten Zeitpunkt mit mindestens einen Alkalimetallsalz, ausgewählt aus der Gruppe bestehend aus Chloriden, Sulfaten, Phosphaten, Monohydrogenphosphaten, Dihydrogenphosphaten, Nitraten und Gemischen hiervon, insbesondere mit einer Gesamtmenge an dem mindestens einen Alkalimetallsalz vorzugsweise von mindestens 5 mg, weiter von vorzugsweise 5 mg bis 50 mg, bevorzugt von 18 mg bis 50 mg, pro 1 g an in der Schichtsilikatzusammensetzung enthaltenem Schichtsilikat, wobei nach dem Behandeln eine Schichtsilikatzusammensetzung erhalten wird, die bei einem Dispergieren in Wasser unter gleichen Bedingungen und bei gleicher Konzentration wie bei der Bereitstellung der ersten und zweiten Dispersion eine dritte Dispersion bereitstellt, die einen dritten Viskositätswert aufweist, der höher als der zweite Viskositätswert ist.

Eine derartige Nachbehandlung einer bereits zuvor alkalisch aktivierten Schichtsilikatzusammensetzung ist insbesondere in hohem Maß von Vorteil, da sie ermöglicht, dass Schichtsilikat- Zusammensetzungen, die bei einem Dispergieren in Wasser eine ungenügenden Viskosität aufweisen, nach der Nachbehandlung wieder einen akzeptablen Viskositätswert innerhalb einer abnehmerseitig vorgegebenen Spezifikation erfüllen. Auf diese Weise können Verluste an Produkten und wertvollen Ressourcen verhindert werden und Transportkosten eingespart werden. Ein derartiges Verfahren wird daher in hohem Maße sowohl von den Herstellern, als auch von den Abnehmern von Schichtsilikat-Zusammensetzungen, beispielsweise Papierherstellern, geschätzt sein.

Überraschenderweise weist die bei der Nachbehandlung von bereits alkalisch aktivierten Schichtsilikatzusammensetzungen nach dem Behandeln mit dem mindestens einen Alkalimetallsalz erhältliche dritte Schichtsilikatzusammensetzungsdispersion ein Gesamtgewicht an Partikeln mit einem Partikeldurchmesser von unter 200 nm auf, das höher als das Gesamtgewicht an Partikeln mit einem Partikeldurchmesser unter 200 nm in der zweiten Schichtsilikatzusammensetzungsdispersion ist.

Besonders gute Ergebnisse können bei der Nachbehandlung von bereits alkalisch aktivierten Schichtsilikat-Zusammensetzungen erhalten werden, wenn als das mindestens eine Alkalimetallsalz Natriumchlorid oder Natriumsulfat oder Gemische umfassend Natriumchlorid und Natriumsulfat eingesetzt werden.

Während der Nachbehandlung einer alkalisch aktivierten Schichtsilikatzusammensetzung können zu einem beliebigen Zeitpunkt weitere Komponenten, die von einem Fachmann ausgewählt werden können, zugesetzt werden. Insbesondere können ein oder mehrere Komponenten ausgewählt aus der Gruppe, bestehend aus organischen und/oder anorganischen Lösungsmitteln, insbesondere Wasser, anorganischen und/oder organischen Säuren und deren Salzen, anorganischen und/oder organische Basen und deren Salzen, Tensiden, Flockungsmitteln, Farbstoffen, etc. zugegeben werden. Das mindestens eine Flockungsmittel kann beispielsweise ein Polymer, insbesondere ein kationisch geladenes Polymer, vorzugsweise ein Polyacrylamid, insbesondere ein kationisch geladenes Polyacrylamid (u.a. Polyacrylamide aus der Percol® Familie (Ciba AG), insbesondere Percol® 178) und/oder ein anionisches Mikropartikel sein. Das Polymer kann aus einer oder mehreren unterschiedlichen Monomereinheiten aufgebaut sein. Insbesondere kann es sich bei dem Polymer um ein Homopolymerisat von Methacrylamid oder Acrylamid oder um ein kationisch modifiziertes Copolymerisat von Acrylamid und/oder Methacrylamid, das heißt insbesondere ein Copolymerisat, das Methacrylamid- oder Acrylamid-Monomereinheiten, sowie eine oder mehrere, gleiche oder unterschiedliche, kationische Monomereinheiten umfasst, handeln. Besonders bevorzugt ist, dass ein Flockungsmittel ein Copolymer umfasst oder aus diesem besteht, das Acrylamid und Acryloxyethyltrimethylammoniumchlorid als Monomereinheiten umfasst.

Bei der Nachbehandlung mit dem mindestens einen Alkalimetallsalz wird eine Schichtsilikatzusammensetzung gebildet, wobei nach Abschluss des Behandelns mit mindestens einem Alkalimetallsalz diese beispielsweise als Extrudat, Knetmasse, Slurry oder Dispersion, vorzugsweise mit einem Feststoffgehalt von 1 bis 7 Gew.-% bezogen auf das Gesamtgewicht der Dispersion, vorliegen kann.

Das nach dem Behandeln der alkalisch aktivierten Schichtsilikat-Zusammensetzung mit dem mindestens einen Alkalimetallsalz anfallende Reaktionsgemisch kann unmittelbar weiter verwendet werden.

Die durch das Nachbehandlungsverfahren erhältliche Schichtsilikatzusammensetzung kann jedoch auch in Form eines Pulvers, Granulats, Extrudats, Formkörpers, einer Slurry oder Dispersion, vorzugsweise mit einem Feststoffgehalt von 1 bis 7 Gew.-% bezogen auf das Gesamtgewicht der Dispersion, gewonnen werden. Verfahrensmaßnahmen hierfür, insbesondere zum Trocknen, Granulieren, Bilden eines Formkörpers können nach beliebigen Verfahren erfolgen.

Es wird weiter eine Schichtsilikatzusammensetzung beschrieben, wie sie mit dem erfindungsgemäßen Verfahren erhältlich ist.

Insbesondere kann eine derartige Schichtsilikatzusammensetzung während einer Zeitspanne, die mit Ende der Behandlungszeitspanne beginnt und bis zu mindestens 4 Wochen danach andauert bei einem Dispergieren in Wasser eine Dispersion bereitstellen, in welcher der Anteil an Partikeln, insbesondere an Schichtsilikatpartikeln, mit einem Partikeldurchmesser von kleiner als 200 nm mindestens 10 Gew.-% des Gesamtgewichts an Partikeln mit einem Partikeldurchmesser kleiner als 100 $\mu$m beträgt.

Vorzugsweise stellt eine Schichtsilikatzusammensetzung, wie sie mit dem erfindungsgemäßen Verfahren erhältlich ist, während einer Zeitspanne, die mit Ende der Behandlungszeitspanne beginnt und bis zu mindestens 12 Wochen, vorzugsweise mindestens 26 Wochen danach andauert, bei einem Dispergieren in Wasser eine wässrige Dispersion (mit einem Gehalt von 5 Gew.-% Schichtsilikat-Zusammensetzung, bezogen auf das Gesamtgewicht der Dispersion) bereit, deren Viskosität mindestens gleich oder um nicht mehr als beispielsweise etwa 20%, vorzugsweise nicht mehr als etwa 10%, bevorzugt nicht mehr als etwa 5%, insbesondere nicht mehr als etwa 2% unter der Viskosität einer nach Ende der Behandlungszeitspanne, aus dieser Schichtsilikat-Zusammensetzung hergestellten Dispersion liegt.

Vorzugsweise stellt eine Schichtsilikatzusammensetzung, die durch das erfindungsgemäße Verfahren erhältlich ist, während einer Zeitspanne, die mit Ende der Behandlungszeitspanne beginnt und bis zu mindestens 12 Wochen, vorzugsweise mindestens 26 Wochen danach andauert, bei einem Dispergieren in Wasser eine wässrige Dispersion (mit einem Gehalt von 5 Gew.-% an Schichtsilikat-Zusammensetzung, bezogen auf das Gesamtgewicht der Dispersion) bereit, deren Viskosität nicht unter einen Viskositätsgrenzwert von 300 mPa s, vorzugsweise nicht unter einen Viskositätsgrenzwert von 400 mPa s, weiter vorzugsweise nicht unter 790 mPa s, bevorzugt nicht unter 850 mPa s, weiter bevorzugt nicht unter 870 mPa s, insbesondere nicht unter 890 mPa s abfällt.

Gemäß einer Ausführungsform kann die Schichtsilikatzusammensetzung Papiermaterialfasern, insbesondere zellstoffhaltige Faserstoffe, und/oder vorzugsweise mindestens ein Flockungsmittel umfassen. Das Flockungsmittel kann beispielsweise ein Homopolymerisat von Acrylamid oder Methacrylamid und/oder ein kationisch modifiziertes Copolymerisat von Acrylamid und/oder Methacrylamid, vorzugsweise ein Polyacrylamid, insbesondere ein kationisch geladenes Polyacrylamid, und/oder ein anionisch geladenes Mikropartikel, umfassen.

Gemäß einem weiteren Aspekt betrifft die Erfindung eine Verwendung einer Schichtsilikatzusammensetzung, wie sie durch das erfindungsgemäße Verfahren erhältlich ist, zur Herstellung von Papier, Pappe, Karton, papierhaltigen Verbundwerkstoffen, insbesondere zum Streichen und/oder Beschichten von Papier, Pappe, Karton, papierhaltigen Verbundwerkstoffen oder zur Störstoffbindung.

Die nach dem oben beschriebenen Verfahren erhaltene Schichtsilikatzusammensetzung kann direkt, bevorzugt in Form einer Suspension, bei der Papierherstellung eingesetzt werden. Es ist jedoch auch möglich, die Schichtsilikatzusammensetzung als trockenes Pulver oder als Granulat einzusetzen. Gemäß einer Ausführungsform wird die Schichtsilikatzusammensetzung getrocknet und gemahlen. Auf diese Weise lässt sich die Schichtsilikatzusammensetzung beispielsweise leicht verpacken und transportieren. Vor der Verwendung bei der Papierherstellung wird dann das trockene Pulver in Wasser eingerührt, sodass eine Suspension erhalten wird. Das Einrühren erfolgt bevorzugt unter Einwirkung hoher Scherkräfte, sodass eine Delaminierung des Schichtsilikats erfolgt und eine Suspension mit einem hohen Anteil kleiner Partikel erhalten wird. Der Feststoffgehalt der wässrigen Suspension beträgt bevorzugt 0,1 bis 10 Gew.-%, weiter bevorzugt 1 bis 5 Gew.-% und gemäß einer weiteren Ausführungsform 1 bis 3 Gew.-%.

Bei einer Herstellung von Papier, Pappe, Karton, papierhaltigen Verbundwerkstoffen kann von der Schichtsilikatzusammensetzung eine Menge von 0,4 bis 2,5 kg pro Tonne Faserstoff, vorzugsweise eine Menge von 0,5 bis 1,1 kg pro Tonne an Faserstoff, insbesondere Zellstoff, zugesetzt werden.

Bei der Papierherstellung kann an sich in bekannter Weise vorgegangen werden. Dabei wird zunächst in üblicher Weise eine Papierfasersuspension hergestellt. Die Papierfasersuspension enthält bevorzugt 0,1 bis 5 Gew.-%, weiter bevorzugt 0,5 bis 3 Gew.-% Papiermaterialfasern.

Als Papiermaterialfasern werden im Rahmen der vorliegenden Erfindung Fasern angesehen, die zur Herstellung von Papier eingesetzt werden und beispielsweise in dem später gebildeten Papier als solche oder in einer chemisch, biologisch oder physikalisch veränderten Form vorliegen können. Papiermaterialfasern sind beispielsweise, jedoch nicht ausschließlich, zellstoffhaltige Faserstoffe.

Zur Herstellung der Papierfasersuspension kann sowohl von Primärfaserstoffen ausgegangen werden als auch von Sekundärfaserstoffen, also Recyclingstoffen, insbesondere Altpapier, die nach dem Gebrauch noch einmal dem Produktionsprozess zugeführt werden.

Die Papierfasersuspension kann übliche Füllstoffe enthalten, wie Kaolin, Talkum, Gips, Bariumsulfat, Kreide, Titanweiß. Diese Füllstoffe werden je nach der gewünschten Papierqualität beispielsweise in einem Anteil von 10 bis 40 Gew.-%, gemäß einer weiteren in einem Anteil von 20 bis 35 Gew.-%, bezogen auf den Faseranteil, der Papierfasersuspension zugesetzt.

Die Papierfasersuspension kann übliche Hilfsstoffe in üblichen Mengen enthalten, beispielsweise Farbstoffe, Entschäumer, Dispergiermittel und Netzmittel.

Die Papierfasersuspension kann in üblicher Weise hergestellt werden. Dazu kann beispielsweise ein Papierbrei unter Einwirken hoher Scherkräfte in Wasser eingebracht werden, sodass die Papierfasern in Wasser suspendiert werden und eine homogene Suspension erhalten wird. Ggf. Können Reinigungsschritte vorgesehen werden, in denen beispielsweise größere Agglomerate aus der Suspension abgetrennt werden.

Die Papierfasersuspension wird dann ausgeflockt. Zum Flocken wird der Papierfasersuspension ein Flockungsmittel zugegeben. Es kann sowohl ein einzelnes als auch eine Kombination verschiedener Flockungsmittel zur Papierfasersuspension zugegeben werden. Gemäß einer bevorzugten Ausführungsform wird der Papierfasersuspension als Flockungsmittel ein kationisches Polymer zugegeben. Das kationische Polymer weist bevorzugt ein hohes Molekülgewicht auf. Gemäß einer Ausführungsform weist das kationische Polymer ein Molekülgewicht von mehr als 200.000 g/mol, gemäß einer weiteren Ausführungsform ein Molekülgewicht von mehr als 500.000 g/mol auf. Als Molekülgewicht wird das gewichtsgemittelte Molekülgewicht der Molekülgewichtsverteilung des Polymers bezeichnet. Das kationisch geladene Polymer kann aus gleichen Monomereinheiten oder zwei oder mehr unterschiedlichen Monomereinheiten aufgebaut sein. Gemäß einer Ausführungsform wird als kationisches Polymer ein Polyacrylamid eingesetzt. Als Polyacrylamid kann gemäß einer Ausführungsform ein Homopolymerisat von Methacrylamid oder Acrylamid oder auch ein kationisch modifiziertes Copolymerisat von Acrylamid und/oder Methacrylamid eingesetzt werden. Insbesondere kann als kationisches Polymer ein Copolymerisat eingesetzt werden, das Methacrylamid- oder Acrylamid-Monomereinheiten, sowie eine oder mehrere, gleiche oder unterschiedliche, kationische Monomereinheiten umfasst. Gemäß einer bevorzugten Ausführungsform wird als Flockungsmittel ein Copolymer verwendet, das Acrylamid und Acryloxyethyltrimethylammoniumchlorid als Monomereinheiten umfasst.

Neben den genannten kationischen Polymeren können auch noch andere, in der Papierherstellung übliche kationische Polymere verwendet werden. Beispielhafte kationische Polymere sind kationische Stärke, Polyethylenimin, Produkte aus Polyaminen und Epichlorhydrin oder Polymere von Diallyldimethylammoniumchlorid.

Das Flockungsmittel, insbesondere das kationische Polymer, wird bevorzugt in einem Anteil von zumindest 0,03 Gew.-%, gemäß einer Ausführungsform in einem Anteil von 0,06 bis 0,2 Gew.-%, bezogen auf das Trockengewicht der Papierfasersuspension der Papierfasersuspension zugesetzt. Die der Papierfasersuspension zugesetzte Menge an Flockungsmittel sollte ausreichend sein, sodass die Papierfasern Flocken bilden.

Ferner können auch anionische Polymere als Flockungsmittel eingesetzt werden. Dies kann beispielsweise bei Verwendung von Recyclingpapier vorteilhaft sein.

Die Zugabe des Flockungsmittels zur Papierfasersuspension erfolgt bevorzugt während auf die Suspension Scherkräfte einwirken.

Die nach dem erfindungsgemäßen Verfahren erhaltene Schichtsilikatzusammensetzung kann zusammen oder getrennt von dem Flockungsmittel zugegeben werden.

Gemäß einer bevorzugten Ausführungsform wird zur Papierfasersuspension zunächst das Flockungsmittel, bevorzugt ein kationisches Polymer zugegeben. Die Zugabe des Flockungsmittels bewirkt das Ausflocken der Papierfasern. Die Flocken können ggf. beispielsweise unter der Einwirkung von Scherkräften zu Mikroflocken zerkleinert werden, welche dem Abbau durch Einwirkung von Scherkraft widerstehen, sodass die Stabilität der Faserflocken erhöht wird.

Zur ausgeflockten und ggf. einer Behandlung unter Einwirkung von Scherkräften unterworfenen Papierfasersuspension wird dann die nach dem erfindungsgemäßen Verfahren erhaltene Schichtsilikatzusammensetzung gegeben. Bevorzugt wird die Schichtsilikatzusammensetzung in Form einer wässrigen Aufschlämmung zugegeben.

Die Zugabe der Schichtsilikatzusammensetzung kann zu jedem dem Fachmann geeigneten Zeitpunkt erfolgen. Bevorzugt wird die Schichtsilikatzusammensetzung unter Einwirkung hoher Scherkraft zugegeben, vorzugsweise unmittelbar bevor die Suspension ausgegossen wird.

Um die Suspension zu scheren, können übliche Vorrichtungen eingesetzt werden.

Die Suspension wird dann in üblicher Weise zu einer Papierbahn oder einem Papierblatt verarbeitet, indem die nach der Zugabe des Schichtsilikats erhaltene Suspension beispielsweise auf ein Sieb gegeben wird. Die Papierbahn bzw. das Papierblatt wird dann in üblicher Weise weiter verarbeitet und beispielsweise getrocknet und ggf. gestrichen.

Gemäß einer Ausführungsform wird vor, gemeinsam mit oder nach der Zugabe der Schichtsilikatzusammensetzung der Suspension ein anionisches Polymer zugegeben.

Bei dem anionisch geladenen Polymer kann es sich insbesondere um ein Polymer handeln, das durch Polymerisation von gleichen oder unterschiedlichen Monomeren erhalten werden kann, wobei die Monomere ein oder mehrere Monomere, ausgewählt aus der Gruppe, bestehend aus (Methyl)acrylsäure und deren Salzen, Sulfoethyl-(meth)acrylat, Itaconsäure, 2-Acrylamido-2-methyl-propansulfonat, Allylsulfonsäure, Styrolsulfonsäure, Vinylsulfonsäure, Maleinsäure, sowie andere mindestens zwei Säurefunktionen umfassende Verbindungen und deren Salze, umfassen können.

Die Verwendung der nach dem erfindungsgemäßen Verfahren erhaltenen Schichtsilikatzusammensetzung bei der Papierherstellung bewirkt eine zur Verbesserung der Retention, insbesondere der Gesamt- und/oder Füllstoffretention, sowie der Drainage bei einer Herstellung von Papier, Pappe, Karton, papierhaltigen Verbundwerkstoffen.

Es wird weiter Papier, Karton, Pappe und/oder papierhaltiger Verbundwerkstoff, umfassend eine Schichtsilikatzusammensetzung beschrieben, wie sie oben beschrieben wurde und wie sie mit dem erfindungsgemäßen Verfahren erhalten wird.

Eine Verwendung von aktivierten Schichtsilikaten ist jedoch nicht auf eine Herstellung von Papier, Karton, Pappen und papierhaltigen Verbundwerkstoffen beschränkt, sondern kann auch auf zahlreichen anderen technischen Gebieten erfolgen, beispielsweise bei Entwässerungsverfahren oder bei Verfahren zur Abtrennung von Feststoffen aus Fluiden, bei Verwendungen als Formsandbinder in der Gießereitechnik, insbesondere der Metall- und Legierungsgießereitechnik, oder als Bohrspühlflüssigkeit bei bau- und/oder bohrtechnischen Anwendungen oder bei einer Verwendung als Waschmitteladditiv oder als Waschmittelkomponente.

So betrifft die Erfindung eine Verwendung einer Schichtsilikatzusammensetzung, wie sie durch das erfindungsgemäße Verfahren erhältlich ist, als Stützflüssigkeit für Schlitzwandfüllungen oder als Bohrschichtsilikat, insbesondere als Bohrbentonit.

Weiter betrifft die vorliegende Erfindung eine Verwendung einer Schichtsilikatzusammensetzung, wie sie durch das erfindungsgemäße Verfahren erhältlich ist, als Formsandbinder, insbesondere für Verwendungen in der Gießereitechnik, beispielsweise in der Metall- und Legierungsgießereitechnik.

Eine Schichtsilikatzusammensetzung, die durch das erfindungsgemäße Herstellungs- und/oder Nachbehandlungsverfahren erhältlich ist, kann weiterhin zur Herstellung einer Formsandzusammensetzung, umfassend Formsand und die durch das erfindungsgemäße Herstellungs- und/oder Nachbehandlungsverfahren erhältliche Schichtsilikatzusammensetzung, oder zur Herstellung einer die vorstehend genannte Formsandzusammensetzung umfassenden Gussform, insbesondere für den Metall- und/oder Legierungsguß, verwendet werden.

Weiter betrifft die Erfindung eine Verwendung einer Schichtsilikatzusammensetzung, wie sie durch das erfindungsgemäße Herstellungs- und/oder Nachbehandlungsverfahren erhältlich ist, als Waschmitteladditiv oder als Waschmittelkomponente.

Die Erfindung wird im Weiteren anhand der nachstehenden, nicht beschränkenden Beispiele sowie unter Bezugnahme auf die beigefügten Figuren näher erläutert. Dabei zeigt:

Fig. 1:    ein Diagramm, das die zeitabhängige Viskositätsveränderung bei Schichtsilikat-Dispersionen veranschaulicht, die ausgehend von einer erfindungsgemäßen Schichtsilikat-Zusammensetzung, sowie von zwei Vergleichszusammensetzungen erhältlich sind;

Fig. 2:    die Viskosität von Dispersionen erfindungsgemäßer Schichtsilikat-Zusammensetzungen und herkömmlicher Schichtsilikat-Zusammensetzungen;

Fig. 3:    das Quellvolumen erfindungsgemäßer SchichtsilikatZusammensetzungen und herkömmlicher Schichtsilikat-Zusammensetzungen nach Dispergieren in Wasser; und

Fig. 4:    die Viskosität von Dispersionen erfindungsgemäßer Schichtsilikat-Zusammensetzungen, welche unter Verwendung von NaCl oder von $Na_2SO_4$ hergestellt wurden im Vergleich zur Viskosität einer herkömmlich mit Soda hergestellten Schichtsilikat-Zusammensetzung.

METHODEN UND MATERIALIEN

Zur Bestimmung der Parameter des erfindungsgemäßen Verfahrens und der dabei eingesetzten Materialien, insbesondere Schichtsilikate, werden die nachstehenden Methoden eingesetzt:

1. Bestimmung der Gesamtkationenaustauschkapazität (CEC) und austauschbarer Kationen

Prinzip der CEC-Bestimmung:

Das zu untersuchende Schichtsilikat enthaltende oder aus Schichtsilikat bestehende Material (nachstehend als Schichtsilikat bezeichnet), beispielsweise ein Ton, wird mit einem großen Überschuss an wässriger $NH_4Cl$ - Lösung behandelt, ausgewaschen und die auf dem Schichtsilikat verbliebene $NH_4^+$ - Menge als Stickstoff an einem Elementaranalysengerät (Fa. Elementar) bestimmt.

$$Me^+ (Ton)^- + NH_4^+ \rightarrow NH_4^+ (Ton)^- + Me^+$$

$$(Me^+ = K^+, Na^+, 1/2\ Ca^{2+}, 1/2\ Mg^{2+}....)$$

Geräte: Sieb 63 μm; Erlenmeyer - Schliffkolben, 300ml; Analysenwaage; Membranfilternutsche, 400 ml; Zel-

lulose-Nitrat-Filter, 0,2μm - (Fa. Machery & Nagel); Vakuumsaugflasche 500ml; Trockenschrank 110 °C; Rückflusskühler; Heizplatte; 250ml Messkolben; 600 ml Becherglas; ICP - OES; Pipette 5 ml; 25 ml Messzylinder.

Chemikalien: NH$_4$Cl - Lösung, 2mol/l p.a. (Merck); Salzsäure 1:2.

Durchführung: 5 g Schichtsilikat werden quantitativ durch ein 63 μm Sieb gesiebt und bei 110 °C bis zur Gewichtskonstanz getrocknet. Danach werden auf der Analysenwaage zwischen 200 und 300 mg in einen Erlenmeyer-Schliffkolben eingewogen. Man gibt 25 ml 2 molare NH$_4$Cl - Lösung zu und kocht die Suspension eine Stunde am Rückfluss.

Nach einer Standzeit von 24 h wird das NH$_4^+$ - Schichtsilikat über eine Membranfilternutsche abfiltriert. Mit destilliertem Wasser wird der Filterkuchen in kleinen Portionen mit insgesamt 1200 ml Wasser gewaschen, das anschließend portionsweise in einem 600 ml Becherglas eingeengt wird.

Das ausgewaschene NH$_4^+$ - Schichtsilikat wird vom Filter abgenommen und während 16 Stunden bei 110 °C getrocknet. Vom trockenen Filterkuchen wird der N-Gehalt am Elementaranalysator bestimmt.

Berechnung der Gesamtkationenaustauschfähigkeit:

Die Gesamtkationenaustauschfähigkeit (CEC) des Schichtsilikats ist der mittels Elementaranalyse ermittelte NH$_4^+$-Gehalt des NH$_4^+$-Schichtsilikats (CEC einiger in den Beispielen eingesetzter Tonmineralien in der nachstehenden Tabelle 3). Die Angaben erfolgen in meq/100 g Schichtsilikat (meq/100g). Hierbei wird angenommen, dass aller Stickstoff in Form von NH$_4^+$vorliegt.

Beispiel: Stickstoff-Gehalt = 0,93 %; Molekulargewicht: N = 14,0067 g/mol

$$CEC = \frac{0,93 \times 1000}{14,0067} = 66,4 \text{ meq/100g Schichtsilikat}$$

Austauschbare Kationen

Bestimmung der freigesetzten Kationen:

Die durch den Umtausch freigesetzten Kationen befinden sich im Waschwasser (Filtrat). Der Anteil und die Art der einwertigen Kationen ("austauschbare Kationen") wurde im Filtrat gemäß DIN 38406, Teil 22, spektroskopisch bestimmt. Beispielsweise wird zur AAS-Bestimmung das Waschwasser (Filtrat) eingeengt, in einen 250 ml Messkolben überführt und mit destilliertem Wasser bis zur Messmarke aufgefüllt. Geeignete Messbedingungen für FAAS sind aus den nachfolgenden Tabellen zu entnehmen.

Tabelle 1: Parameter zur FAAS Bestimmung Teil 1

| Element | Calcium | Kalium | Lithium | Magnesium | Natrium |
|---|---|---|---|---|---|
| Wellenlänge (nm) | 422,7 | 766,5 | 670,8 | 285,2 (202,6) | 589,0 |
| Spaltbreite (nm): | 0,2 | 0,5 | 0,5 | 0,5 | 0,2 |
| Integr. Zeit (sek): | 3 | 3 | 3 | 3 | 3 |
| Flammengase: | N$_2$O/C$_2$H$_2$ | Luft/C$_2$H$_2$ | Luft/C$_2$H$_2$ | N$_2$O/C$_2$H$_2$ | Luft/C$_2$H$_2$ |
| Untergrundkomp. : | nein | nein | nein | ja | nein |
| Messart: | conc. | conc. | conc. | conc. | conc. |
| Ionisationspuffer: | 0,1 % KCl | 0,1% NaCl | 0,1% NaCl | 0,1% KCl | 0,1% KCl |
| Brennerposition | 15-20° | - | - | - | - |
| Eichstand (mg/l): | 1-5 mg/l | 1-5 mg/l | 2-10 mg/l | 0,5-3 mg/l (5-40 mg/l) | 1-5 mg/l |

Tabelle 2: Parameter zur FAAS Bestimmung Teil 2

| Element | Aluminium | Eisen |
|---|---|---|
| Wellenlänge (nm): | 309,3 | 248,3 |
| Spaltbreite (nm): | 0,5 | 0,2 |
| Integr. Zeit (sek): | 3 | 3 |
| Flammengase: | $N_2O/C_2H_2$ | $Luft/C_2H_2$ |
| Untergrundkomp. : | ja | nein |
| Messart: | conc. | conc. |
| Ionisationspuffer: | 0,1 % KCl | - |
| Brennerposition | - | - |
| Eichstand. (mg/l): | 10-50 mg/l | 1-5 mg/l |

Berechnung der Kationen:

$$Me = \frac{Me\text{-Wert (mg/l)} \times 100 \times Verdünnung}{4 \times Einwaage \text{ (in g)} \times Molmasse \text{ (g/mol)}} = meq/100g$$

Molmassen (g/mol): Ca=20,040; K=39,096; Li=6,94; Mg=12,156; Na=22,990; Al=8,994; Fe=18,616

2. Anteil an Partikeln mit einem Partikeldurchmesser von weniger als 200 nm

Die Fraktionierung der Partikel mit einem Partikeldurchmesser von weniger als 200 nm beziehungsweise von weniger als 100 $\mu$m kann gemäß C.B. Tanner und M.L. Jackson, "Nomographs of Sedimentation Times for Soil Particles Under Gravity or Centrifugal Acceleration", SOIL SCIENCE SOCIETY PROCEEDINGS, 12, Seite 60 bis 65 (1947) erfolgen. Zuerst erfolgt eine Abtrennung der Fraktion der Partikeln kleiner 2 $\mu$m im Schwerfeld, entsprechend der oben erwähnten Methode. Anschließend wird eine Abtrennung der Fraktion von Partikeln kleiner 200 nm im Zentrifugalfeld (an der Zentrifuge von der Fa. Heraeus Instruments, Megafuge 1.0) durchgeführt. Die Temperatur der aufzutrennenden Probe wird während der Abtrennung und Zentrifugation bei 20°C konstant gehalten und die Anlauf- und Auslaufzeiten der Zentrifuge werden gleich lang gehalten.

Nach Abtrennung der Teilchenfraktionen bis weniger als 200 nm beziehungsweise bis weniger als 100 $\mu$m werden diese bei 130 °C bis zur Gewichtkonstanz getrocknet. Anschließend wird das jeweilige Gewicht der Teilchenfraktionen bestimmt.

3. Bestimmung der Viskosität

Die Viskosität der Pasten bzw. Suspensionen bzw. Dispersionen kann mit einem Brookfield Viscometer (Abkürzung: BV), Modell DV-II von der Fa. Brookfield nach den Angaben des Herstellers ermittelt werden.

Insbesondere können, wie in den nachstehend angegebenen Beispielen erfolgt, 5 Gew.-%-ige Dispersionen der Schichtsilikatzusammensetzungen in Wasser, bezogen auf das Gesamtgewicht der Dispersion, einer Viskositätsmessung mit einem Brookfield Viscometer (Abkürzung: BV), Model DV-II von der Fa. Brookfield nach den Angaben des Herstellers bei 100 rpm (Umdrehungen pro Minute), einer Temperatur von 25 °C, Spindel 3 unter Verwendung eines Bechers mit einem unteren Durchmesser von 7,5 cm, einem oberen Durchmesser von 9 cm, einer Becherhöhe von 12,5 cm, sowie einer Füllung des Bechers zu 75 % der Becherhöhe unterzogen werden. Die Erfassung erfolgte nach einer Rührzeit von 2 Minuten.

4. Bestimmung des Schichtsilikatgewichts und des Feststoffgehalts

Die Gewichtsangaben zu Schichtsilikaten (bzw. Schichtsilikatzusammensetzungen) oder Feststoffgehalt beziehen sich, wenn nicht explizit abweichend angegeben, auf Schichtsilikate (bzw. Schichtsilikatzusammensetzungen) oder feststoffhaltige Materialien, die bei 130°C bis zur Gewichtskonstanz getrocknet wurden.

5. Bestimmung des Quellvolumens

Das Quellvolumen wird wie folgt bestimmt:

Ein kalibrierter 100 ml-Meßzylinder wird mit 100 ml dest. Wasser gefüllt. 2,0 g der zu messenden Substanz werden in Portionen von 0,1 bis 0,2 g langsam auf der Wasseroberfläche gegeben. Nach dem Absinken des Materials wird das nächste Quantum aufgegeben. Nach Beendigung der Zugabe wartet man 1 Stunde und liest dann das Volumen der aufgequollenen Substanz in ml/2g ab.

Eingesetzte Bentonite

Die in den nachstehend beschriebenen Beispielen eingesetzten Schichtsilikate sind in der Tabelle 3 dargestellt, wobei diese in den nachstehenden Beispielen auch als "Rohbentonite" bezeichnet werden:

Tabelle 3: Eingesetzte (Roh)-Bentonite

| | (Roh)-Bentonit 1 | (Roh)-Bentonit 2 |
|---|---|---|
| Hauptzwischenschichtkation [meq/100g] | $Na^+$ /$Ca^{2+}$ | $Ca^{2+}$ |
| Anteil an austauschbarem $Ca^{2+}$ ** [meq/100g] | 58 | 57 |
| Anteil an austauschbarem $Na^+$ ** [meq/100g] | 64 | 2,7 |
| Anteil an austauschbarem $K^+$ ** [meq/100g] | 2,8 | 2 |
| Anteil an austauschbarem $Mg^{2+}$ ** [meq/100g] | 25 | 16 |
| CEC [meq/100g]* | 100 | 58 |
| Montmorillonitgehalt [%] | 98 | 64 |
| pH-Wert | 9,0 | 8,3 |
| Quellvolumen in dest. Wasser [ml/2g] | 11 | 6 |
| * Gesamtkationenaustauschkapazität der Probe<br>** bestimmt gemäß dem im vorstehenden Methodenteil beschriebenen Verfahren (Ammoniumchlorid-Austausch-Methode) | | |

Für die Aktivierung eingesetzte Salze:

Natriumcarbonat (Soda), in technischer Qualität von der Fa. Solvay; Natriumchlorid, in technischer Qualität von Merck; Natriumsulfat, in technischer Qualität von Merck.

BEISPIELE

Beispiel 1:

Herstellung von Schichtsilikat-Zusammensetzungen

An einem Extruder (W&P-Kneter) wird der Rohton (Bentonit 2) mit einem 25-38 Gew.-%-igen Wassergehalt vorgelegt und für 3 Minuten homogenisiert (Vorkneten). Anschließend werden die nachstehend angegebenen Mengen an Soda (Vergleichsversuche) oder Soda und Natriumchlorid umfassenden Salzgemischen zugegeben. Anschließend werden die jeweiligen Gemische für weitere 10 Minuten geknetet.

Die Versuche sind in Tabelle 4 zusammengefasst. Die Mengenangaben in Gewichtsprozent sind jeweils auf das Gesamtgewicht an bei 130 °C bis zur Gewichtskonstanz getrockneten Rohton bezogen.

Tabelle 4: Mit Bentonit 2 durchgeführte Versuche

| Versuch | Soda | Natriumchlorid |
|---|---|---|
| Vergleichsversuch 1 | 5,5 Gew.-% | -- |

(fortgesetzt)

| Versuch | Soda | Natriumchlorid |
|---------|------|----------------|
| Ansatz 1 | 5,5 Gew.-% | 1 Gew.-% |
| Ansatz 2 | 5,5 Gew.-% | 1,5 Gew.-% |
| Ansatz 3 | 5,5 Gew.-% | 2 Gew.-% |

Analoge Versuche wurden durchgeführt, wobei jedoch statt Bentonit 2 Bentonit 1 verwendet wurde. Die zur Aktivierung eingesetzten Mengen an Soda und Natriumchlorid bzw. Natriumsulfat sind in Tabelle 5 zusammengefasst.

Tabelle 5: Mit Bentonit 1 durchgeführte Versuche

| Versuch | Soda | Natriumsulfat | Natriumchlorid |
|---------|------|---------------|----------------|
| Vergleichsversuch 2 | 5 Gew.-% | -- | -- |
| Ansatz 4 | 5 Gew.-% | -- | 1,5 Gew.-% |
| Ansatz 5 | 5 Gew.-% | 1,5 Gew.-% | |

Anschließend wurden die extrudierten Schichtsilikat- Zusammensetzungen bei 80 °C auf eine Restfeuchtigkeit von 12 Gew.-% getrocknet und weiter anschließend auf einer Mühle (Schlagrotormühle der Fa. Retsch 0,12 mm Sieb) vorvermahlen und an einer der Ultrazentrifugalmühle (Fa. Retsch 0,08 mm Sieb) feinvermahlen.

Alle Schichtsilikat-Zusammensetzungen wiesen eine ausreichende Retention und eine ausreichende Drainage bei einer Herstellung von Papier auf.

Beispiel 2

An einem Extruder (W&P-Kneter) wird der Rohton (Bentonit 1) mit einem 25-38 Gew.-%-igen Wassergehalt vorgelegt und für 3 Minuten homogenisiert (vorkneten). Anschließend werden die nachstehend angegebenen Mengen an Soda (Vergleichsversuche) oder Soda und Natriumchlorid umfassenden Salzgemischen zugegeben. Anschließend werden die jeweiligen Gemische für weitere 10 Minuten geknetet. Ein weiterer Versuch wurde unternommen, indem nach 3 Minuten Homogenisieren (vorkneten) die nachstehend angegebene Menge an Soda zugegeben wird und für weitere 7 Minuten geknetet wird. Anschließend werden die unten angeführten Mengen an Natriumchlorid zugegeben und für weitere 3 Minuten geknetet.

Für den Vergleichsversuch wird Soda in einer Menge von 5 Gew.-% zugegeben (Vergleichsversuch 3), während bei dem erfindungsgemäßen Versuch ein Salzgemisch bestehend aus Soda in einer Menge von 5 Gew.-% und Natriumchlorid in einer Menge von 2 Gew.-% (Ansatz 6), oder bei einem weiteren Versuch Soda in einer Menge von 5 Gew.-% zugegeben und für 7 Minuten geknetet und anschließend Natriumchlorid in einer Menge von 2 Gew.-% (Ansatz 7), zugegeben wurden. Die Mengenangaben in Gewichtsprozent sind jeweils auf das Gesamtgewicht an bei 130 °C bis zur Gewichtskonstanz getrockneten Rohton bezogen.

Anschließend wurden die extrudierten Schichtsilikat- Zusammensetzungen bei 80 °C auf eine Restfeuchtigkeit von 12 Gew.-% getrocknet und weiter anschließend auf einer Mühle (Schlagrotormühle der Fa. Retsch 0,12 mm Sieb) vorvermahlen und an einer der Ultrazentrifugalmühle (Fa. Retsch 0,08 mm Sieb) feinvermahlen.

Alle Schichtsilikat-Zusammensetzungen wiesen eine ausreichende Retention und eine ausreichende Drainage bei einer Herstellung von Papier auf.

Beispiel 3

Herstellung einer Schichtsilikat-Zusammensetzungs-Slurry

In einem 5 L Becher wird 2 L Wasser vorgelegt und unter Rühren (am Pendraulikrührer mit einer Dissolverscheibe bei 930 UPM) in einem Zeitraum von 3 Minuten wird fein vermahlene Schichtsilikat-Zusammensetzung (hergestellt gemäß Beispiel 1) portionsweise zugegeben und für weitere 15 Minuten bei 1865 UPM dispergiert. Bei dieser Herstellungsweise kann der Schichtsilikatanteil in der derart hergestellten Slurry 1-5 Gew.-%-ig, bezogen auf das Gesamtgewicht der Slurry, vorliegen.

Die so hergestellten Schichtsilikat-Zusammensetzungs-Slurries weisen bei Versuchen zu Retention und Drainage, insbesondere bei einer Papierherstellung, gute Eigenschaften auf.

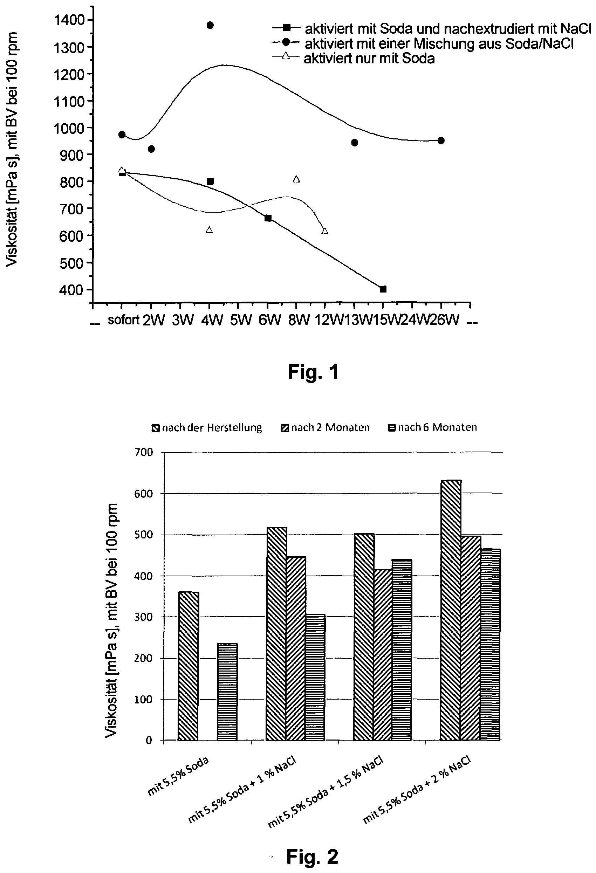

Bei den gemäß Beispiel 3 hergestellten Schichtsilikatsuspensionen, welche jeweils einen Gehalt an Schichtsilikatzusammensetzung von 5 Gew.-% aufwiesen, wurde die Viskosität unmittelbar nach der Herstellung der Suspension sowie nach den in Tabelle 6 angegebenen Lagerzeiten gemessen. Die mit einer Mischung aus Soda und NaCl aktivierte Probe zeigte auch nach längerer Lagerung praktisch keine Abnahme der Viskosität. Die Ergebnisse sind in Tabelle 6 zusammengefasst sowie in Figur 1 graphisch wiedergegeben.

Tabelle 6: Viskosität von Schichtsilikatsuspensionen hergestellt aus verschieden aktivierten Schichtsilikatzusammmensetzungen nach Lagerung, [mPas], mit BV bei 100 rpm

| Zeitpunkt der Messung (Wochen) | Vergleich 3 | Ansatz 6 | Ansatz 7 |
|---|---|---|---|
| sofort | 841 | 974 | 834 |
| 2 | -- | 920 | -- |
| 4 | 616 | 1380 | 800 |
| 6 |  | 663 |  |
| 8 | 805 | -- | -- |
| 12 | 610 | -- | -- |
| 13 | -- | 942 | -- |
| 15 | -- | -- | 400 |
| 26 | -- | 950 | -- |

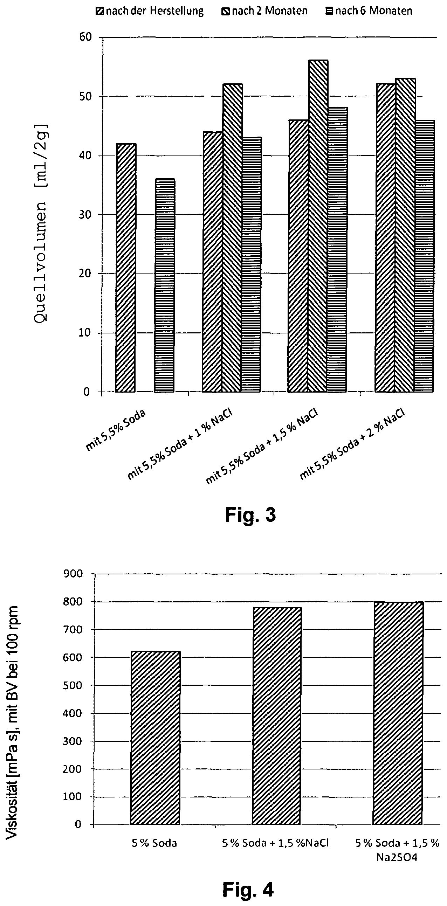

Bei den gemäß Beispiel 3 hergestellten Suspensionen gemäß dem Vergleichsversuch 1 sowie den Ansätzen 1 bis 3 wurde die Viskosität und das Quellvolumen jeweils unmittelbar nach Herstellung der Schichtsilikatzusammensetzung sowie nach 2 und 6 Monaten Lagerzeit bestimmt. Die Schichtsilikatsuspensionen wiesen einen Gehalt von 5 Gew.-% an Schichtsilikatzusammensetzung, bezogen auf das Gesamtgewicht der Schichtsilikatsuspension, auf. Die Daten sind in Tabelle 7 zusammengefasst sowie in den Figuren 2 und 3 graphisch wiedergegeben.

Tabelle 7: Viskosität, [mPas] mit BV bei 100 rpm, und Quellvolumen, [ml/2g],von Schichtsilikatsuspensionen hergestellt aus verschieden aktivierten Schichtsilikatzusammmensetzungen nach Lagerung

| | Vergleich 1 | Ansatz 1 | Ansatz 2 | Ansatz 3 |
|---|---|---|---|---|
| Viskosität | | | | |
| sofort | 361 | 516 | 501 | 630 |
| 2 Monate | -- | 446 | 414 | 494 |
| 6 Monate | 235 | 305 | 438 | 462 |
| Quellvolumen | | | | |
| sofort | 42 | 44 | 46 | 52 |
| 2 Monate | -- | 52 | 56 | 53 |
| 6 Monate | 36 | 43 | 48 | 46 |

Bei den gemäß Beispiel 3 hergestellten Suspensionen des Vergleichsversuchs 2 und der Ansätze 4 und 5, bei welchen unterschiedliche Alkalimetallsalze für die Aktivierung verwendet wurden, wurde die Viskosität unmittelbar nach der Herstellung gemessen. Die Schichtsilikatsuspensionen wiesen einen Gehalt von 5 Gew.-% Schichtsilikatzusammensetzung, bezogen auf das Gesamtgewicht der Schichtsilikatsuspension, auf. Die für die verschieden aktivierten Schichtsilikatzusammensetzungen ermittelte Viskosität ist in Tabelle 8 zusammengefasst und in Figur 4 graphisch wiedergegeben.

Tabelle 8: Viskosität von Schichtsilikatsuspensionen hergestellt aus verschieden aktivierten Schichtsilikatzusammmensetzungen nach Lagerung, [mPas], mit BV bei 100 rpm

| Vergleich 2 | Ansatz 4 | Ansatz 5 |
|---|---|---|
| 622 | 780 | 798 |

**Patentansprüche**

1. Verfahren zur Herstellung einer Schichtsilikatzusammensetzung, welches umfasst:

   a. Bereitstellen eines Ausgangsmaterials, welches mindestens ein Schichtsilikat umfasst;
   b. Inkontaktbringen des Ausgangsmaterials

   - mit mindestens einem Alkalimetallsalz, ausgewählt aus der Gruppe bestehend aus Chloriden, Sulfaten, Phosphaten, Monohydrogenphosphaten, Dihydrogenphosphaten, Nitraten und Gemischen hiervon,
   - sowie mit Natriumcarbonat,

   wobei die Menge an Natriumcarbonat so gewählt wird, dass die Menge der Natriumionen zwischen 80 und 120 % der gesamten Kationenaustauscherkapazität des Schichtsilikats entspricht und die Menge des zumindest einen Alkalimetallsalzes so gewählt wird, dass die Menge der Alkalimetallionen zwischen 20 und 50 % der gesamten Kationenaustauscherkapazität des Schichtsilikats entspricht, wobei sich die Prozentangaben auf Äquivalente beziehen,
   wobei das eine Alkalimetallsalz Natrium oder Kalium enthält, und
   wobei das Schichtsilikat ausgewählt ist aus Bentonit, Montmorillonit, Hectorit, Saponit, Stevensit, Beidelit, Nontronit und deren Gemischen.

2. Verfahren nach Anspruch 1, wobei das Inkontaktbringen mit Natriumcarbonat gleichzeitig oder nach dem Inkontaktbringen des Ausgangsmaterials mit dem mindestens einen Alkalimetallsalz erfolgt.

3. Verfahren nach Anspruch 1, wobei das Gewichtsverhältnis zwischen dem mindestens einen Alkalimetallsalz und dem Natriumcarbonat, mindestens 0,05 beträgt.

4. Verfahren nach einem der vorstehenden Ansprüche, wobei das Gewichtsverhältnis zwischen dem mindestens einem Alkalimetallsalz zu dem Schichtsilikat des Ausgangsmaterials mindestens 0,5:100 beträgt.

5. Verfahren nach einem der vorstehenden Ansprüche, wobei das Gewichtsverhältnis zwischen dem Natriumcarbonat zu dem Schichtsilikat mindestens 0,5:100 beträgt.

6. Verfahren nach einem der vorstehenden Ansprüche, wobei die Schichtsilikatzusammensetzung mit dem Natriumcarbonat in Kontakt gebracht wird, sodass eine alkalisch aktivierte Schichtsilikatzusammensetzung erhalten wird, die alkalisch aktivierte Schichtsilikatzusammensetzung für eine Zeitspanne gelagert wird, und nach der Zeitspanne der alkalisch aktivierten Schichtsilikatzusammensetzung das Alkalimetallsalz zugesetzt wird.

7. Verfahren nach Anspruch 6, wobei die Menge des weiteren Alkalimetallsalzes mindestens 5 mg pro g an in der Schichtsilikatzusammensetzung enthaltenem Schichtsilikat beträgt.

8. Verwendung der Schichtsilikatzusammensetzung, welche nach einem Verfahren gemäß einem der Ansprüche 1 bis 7 bereitgestellt wird, zur Herstellung von Papier, Pappe, Karton, papierhaltigen Verbundwerkstoffen.

9. Verwendung nach Anspruch 8, wobei die Schichtsilikatzusammensetzung zum Streichen und/oder Beschichten von Papier, Pappe, Karton, papierhaltigen Verbundwerkstoffen verwendet wird.

10. Verwendung nach Anspruch 8, wobei zur Herstellung von Papier, Pappe, Karton, papierhaltigen Verbundwerkstoffen wobei

   - eine Papierfasersuspension bereitgestellt wird,
   - ein Flockungsmittel zur Papierfasersuspension gegeben wird, wobei eine ausgeflockte Papierfasersuspension erhalten wird,

- die Schichtsilikatzusammensetzung zur ausgeflockten Papierfasersuspension gegeben wird, und
- eine erhaltene Mischung zur Blattbildung auf ein Sieb ausgegossen wird.

11. Verwendung nach Anspruch 10, wobei das Flockungsmittel ein kationisches Polymer ist.

12. Verwendung nach Anspruch 10 oder 11, wobei mit der Schichtsilikatzusammensetzung ein anionisches Polymer zur ausgeflockten Papierfasersuspension gegeben wird.

## Claims

1. Method for producing a phyllosilicate composition, said method comprising:

   a. providing a starting material comprising at least one phyllosilicate;
   b. contacting the starting material

      - with at least one alkali metal salt selected from the group consisting of chlorides, sulfates, phosphates, monohydrogenphosphates, dihydrogenphosphates, nitrates and mixtures thereof,
      - and also with sodium carbonate,

   wherein the amount of sodium carbonate is chosen such that the amount of sodium ions corresponds to between 80 and 120% of the entire cation exchanger capacity of the phyllosilicate and the amount of the at least one alkali metal salt is chosen such that the amount of alkali metal ions corresponds to between 20 and 50% of the entire cation exchanger capacity of the phyllosilicate, wherein the percentages are based on equivalents, wherein the one alkali metal salt contains sodium or potassium, and wherein the phyllosilicate is selected from bentonite, montmorillonite, hectorite, saponite, stevensite, beidelite, nontronite and mixtures thereof.

2. Method according to Claim 1, wherein the step of contacting with sodium carbonate is effected at the same time or after the step of contacting the starting material with the at least one alkali metal salt.

3. Method according to Claim 1, wherein the weight ratio between the at least one alkali metal salt and the sodium carbonate is at least 0.05.

4. Method according to any preceding claim, wherein the weight ratio between the at least one alkali metal salt to the phyllosilicate of the starting material is at least 0.5:100.

5. Method according to any preceding claim, wherein the weight ratio between the sodium carbonate to the phyllosilicate is at least 0.5:100.

6. Method according to any preceding claim, wherein the phyllosilicate composition is contacted with the sodium carbonate so as to obtain an alkali-activated phyllosilicate composition, the alkali-activated phyllosilicate composition is stored for a period, and, after the period, the alkali metal salt is added to the alkali-activated phyllosilicate composition.

7. Method according to Claim 6, wherein the amount of the further alkali metal salt is at least 5 mg per g of phyllosilicate present in the phyllosilicate composition.

8. Use of the phyllosilicate composition provided by a method according to any of Claims 1 to 7 to produce paper, paperboard, cardboard, paper-based composite materials.

9. Use according to Claim 8, wherein the phyllosilicate composition is used to coat paper, paperboard, cardboard, paper-based composites.

10. Use according to Claim 8, wherein to produce paper, paperboard, cardboard, paper-based composites

    - a paper fibre suspension is provided,

- a flocculant is added to the paper fibre suspension to obtain a flocculated paper fibre suspension,
- the phyllosilicate composition is added to the flocculated paper fibre suspension, and
- a mixture obtained is poured out onto a wire to form a sheet.

**11.** Use according to Claim 10, wherein the flocculant is a cationic polymer.

**12.** Use according to Claim 10 or 11, wherein an anionic polymer is added to the flocculated paper fibre suspension together with the phyllosilicate composition.

## Revendications

**1.** Procédé de fabrication d'une composition de silicate en feuillets, qui comprend :

a. la préparation d'un matériau de départ, qui comprend au moins un silicate en feuillets ;
b. la mise en contact du matériau de départ

- avec au moins un sel de métal alcalin, choisi dans le groupe constitué par les chlorures, les sulfates, les phosphates, les monohydrogénophosphates, les dihydrogénophosphates, les nitrates et leurs mélanges,
- et avec du carbonate de sodium,

la quantité de carbonate de sodium étant choisie de sorte que la quantité des ions sodium corresponde à entre 80 et 120 % de la capacité d'échange de cations totale du silicate en feuillets et la quantité dudit au moins un sel de métal alcalin étant choisie de sorte que la quantité des ions métal alcalin corresponde à entre 20 et 50 % de la capacité d'échange de cations totale du silicate en feuillets, les données de pourcentage se rapportant à des équivalents,
le sel de métal alcalin contenant du sodium ou du potassium, et
le silicate en feuillets étant choisi parmi la bentonite, le montmorillonite, l'hectorite, la saponite, la stévensite, la beidellite, la nontronite et leurs mélanges.

**2.** Procédé selon la revendication 1, dans lequel la mise en contact avec le carbonate de sodium a lieu simultanément avec ou après la mise en contact du matériau de départ avec ledit au moins un sel de métal alcalin.

**3.** Procédé selon la revendication 1, dans lequel le rapport en poids entre ledit au moins un sel de métal alcalin et le carbonate de sodium est d'au moins 0,05.

**4.** Procédé selon l'une quelconque des revendications précédentes, dans lequel le rapport en poids entre ledit au moins un sel de métal alcalin et le silicate en feuillets du matériau de départ est d'au moins 0,5:100.

**5.** Procédé selon l'une quelconque des revendications précédentes, dans lequel le rapport en poids entre le carbonate de sodium et le silicate en feuillets est d'au moins 0,5:100.

**6.** Procédé selon l'une quelconque des revendications précédentes, dans lequel la composition de silicate en feuillets est mise en contact avec le carbonate de sodium de manière à obtenir une composition de silicate en feuillets activée alcaliniquement, la composition de silicate en feuillets activée alcaliniquement est entreposée pendant une période de temps et, après la période de temps, le sel de métal alcalin est ajouté à la composition de silicate en feuillets activée alcaliniquement.

**7.** Procédé selon la revendication 6, dans lequel la quantité du sel de métal alcalin supplémentaire est d'au moins 5 mg par g de silicate en feuillets contenu dans la composition de silicate en feuillets.

**8.** Utilisation de la composition de silicate en feuillets qui est préparée par un procédé selon l'une quelconque des revendications 1 à 7 pour la fabrication de papier, de bristol, de carton, de matériaux composites contenant du papier.

**9.** Utilisation selon la revendication 8, dans laquelle la composition de silicate en feuillets est utilisée pour le couchage et/ou le revêtement de papier, de bristol, de carton, de matériaux composites contenant du papier.

**10.** Utilisation selon la revendication 8, selon laquelle, pour la fabrication de papier, de bristol, de carton, de matériaux composites contenant du papier,

- une suspension de fibres de papier est préparée,
- un agent de floculation est ajouté à la suspension de fibres de papier, une suspension de fibres de papier floculée étant obtenue,
- la composition de silicate en feuillets est ajoutée à la suspension de fibres de papier floculée, et
- un mélange obtenu est versé sur un tamis pour la formation de feuilles.

11. Utilisation selon la revendication 10, dans laquelle l'agent de floculation est un polymère cationique.

12. Utilisation selon la revendication 10 ou 11, dans laquelle un polymère anionique est ajouté à la suspension de fibres de papier floculée avec la composition de silicate en feuillets.

**Fig. 1**

**Fig. 2**

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4359339 A
- US 35391228 B
- US 5223098 A

**In der Beschreibung aufgeführte Nicht-Patentliteratur**

- **LEBENDENKO ; PLEE.** *Applied Clay Science,* 1988, vol. 3, 1-10
- **N. WIBERG.** Holleman-Wiberg, Lehrbuch der Anorganischen Chemie. Walter de Gruyter & Co, 1985, 768-779
- **C.B. TANNER ; M.L. JACKSON.** Nomographs of Sedimentation Times for Soil Particles Under Gravity or Centrifugal Acceleration. *SOIL SCIENCE SOCIETY PROCEEDINGS,* 1947, vol. 12, 60-65